# EUROPEAN PATENT SPECIFICATION

(11) **EP 3 534 266 B1**
(45) Date of publication and mention of the grant of the patent: **14.02.2024**
(21) Application number: 17869063.2
(22) Date of filing: 06.11.2017
(51) Int. Cl.: G06F 12/0862, G06F 9/30, G06F 9/38

(54) **METHOD, APPARATUS AND SYSTEM FOR PREFETCHING DATA**
VERFAHREN, VORRICHTUNG UND SYSTEM ZUM VORAUSLADEN VON DATEN
PROCÉDÉ, APPAREIL ET SYSTÈME DE PRELECTURE DE DONNÉES

(30) Priority: 08.11.2016 CN 201610979946
(43) Date of publication of application: 04.09.2019
(73) Proprietor: Huawei Technologies Co., Ltd., Longgang District Shenzhen, Guangdong 518129 (CN)
(72) Inventor: ZHOU, Wei, Shenzhen Guangdong 518129 (CN); YU, Gang, Shenzhen Guangdong 518129 (CN); BI, Bo, Shenzhen Guangdong 518129 (CN)
(74) Representative: Goddar, Heinz J.
(86) International application number: PCT/CN2017/109536
(87) International publication number: WO 2018/086494

(56) References cited:
- EP-A2- 1 031 919
- CN-A- 101 652 759
- CN-A- 101 667 159
- CN-A- 102 981 883
- CN-A- 105 426 322
- US-A1- 2011 167 224

## Description

### TECHNICAL FIELD

Embodiments of this application relate to the computer field, and in particular, to a data prefetching method, apparatus, and system in the computer field.

### BACKGROUND

With rapid development of microprocessor technologies, a clock speed of a central processing unit (CPU) is improved, a quantity of cores is increased, and CPU performance is significantly improved. However, improvement on overall performance of a computer is limited mainly because of a delay caused by fetching data from a storage by the CPU. To reduce the delay caused by fetching data from the storage by the CPU, a cache is added between the CPU and the storage, and data frequently used by the CPU is prefetched into the cache. When the CPU needs to access data in a memory, the CPU first queries whether the data that needs to be accessed by the CPU is in the cache and whether the data that needs to be accessed expires. If the data that needs to be accessed is in the cache and has not expired, the data is read from the cache. That the data that needs to be accessed by the CPU is in the cache is referred to as a hit, and that the data that needs to be accessed by the CPU is not in the cache is referred to as a miss.

In the prior art, a software prefetch instruction is inserted into a function. When the prefetch instruction is to be executed during running of a program, data in a memory is prefetched into a cache according to the prefetch instruction. A use range of the prefetch instruction is usually limited to a function. A time for prefetching data according to the prefetch instruction is specified by a program developer, and the time for prefetching data is limited to some extent.

EP 1 031 919 A2 discloses a method for prefetching structured data, and more particularly a mechanism for observing address references made by a processor, and learning from those references the patterns of accesses made to structured data. Structured data means aggregates of related data such as arrays, records, and data containing links and pointers. When subsequent accesses are made to data structured in the same way, the mechanism generates in advance the sequence of addresses that will be needed for the new accesses. This sequence is utilized by the memory to obtain the data somewhat earlier than the instructions would normally request it, and thereby eliminate idle time due to memory latency while awaiting the arrival of the data.

### SUMMARY

According to a data prefetching method, apparatus, and system provided in embodiments of this application, data prefetching flexibility is improved. The invention is set out as in the appended claims.

According to a first aspect, a data prefetching method is provided, and the method includes: obtaining, by a compiler, N functions and one or more global variables of the N functions, where N is an integer greater than or equal to 1, the N functions relating to a specific service; and determining, by the compiler, a start address of one of the N functions and a start address of the one or more global variables of the N functions, so that when a prefetch engine reads the start address of one of the N functions, the prefetch engine prefetches, into a cache, according to the start address of one of the N functions and the start address of the one or more global variables, data that is in a memory and that is associated with the one or more global variables, wherein there is an address mapping relationship between the start address of the one or more global variables and a start address of the data.

In some implementations, the foregoing method is applied to a computer system. The computer system includes a prefetch engine, a memory, and a compiler. The compiler may perform the foregoing method. Specifically, the compiler may perform the foregoing method in a compilation process.

In some implementations, the start address of one of the N functions may be a start address shared by the N functions. The start address of one of the N functions may be a prefetching time for prefetching data in the memory into the cache. The prefetching time may be a start address of one of the N functions. The prefetching time may usually be a start address of a function that is parsed out from the N functions by the compiler and that has a foremost address, or may certainly be a start address of a function at a specific location. When the prefetch engine reads the start address of one of the N functions, the start address of one of the N functions is used to trigger the prefetch engine to prefetch, into the cache, the data that is in the memory and that is associated with the one or more global variables.

In some implementations, the start address of the one or more global variables may be a start address that is of the one or more global variables and that is parsed out by the compiler. There is an address mapping relationship between the start address that is of the one or more global variables and that is parsed out by the compiler and a start address that is in the memory and at which the data associated with the one or more global variables is stored. When obtaining the start address that is of the one or more global variables and that is parsed out by the compiler, the prefetch engine determines, according to the address mapping relationship and the start address of the one or more global variables, the start address that is in the memory and at which the data associated with the one or more global variables is stored. Further, the prefetch engine prefetches, into the cache according to the start address that is in the memory and at which the data associated with the one or more global variables is stored, the data that is in the memory and that is of the one or more global variables. The start address of the one or more global variables may alternatively be a start address, directly compiled by the compiler, of the data that is in the memory and that is associated with the one or more global variables.

In this embodiment of this application, the compiler first obtains the N functions and the one or more global variables of the N functions, and then determines the start address of one of the N functions and the start address of the one or more global variables. The prefetch engine prefetches, into the cache according to the start address of one of the N functions and the start address of the one or more global variables, the data that is in the memory and that is associated with the one or more global variables. The start address of one of the N functions may be understood as the prefetching time for prefetching the data. The prefetch engine and the compiler may perform execution in parallel. The prefetching time is the start address of one of the N functions and does not depend on a software prefetch instruction in the prior art, so that prefetching flexibility is improved.

In some implementations, when the prefetch engine reads the start address of one of the N functions, or after a second time period after the prefetch engine reads the start address of one of the N functions, or in a first time period before the prefetch engine reads the start address of one of the N functions, the prefetch engine prefetches, into the cache according to the start address of the one or more global variables, the data that is in the memory and that is associated with the one or more global variables, and may flexibly determine the prefetching time according to the start address of one of the N functions.

In some implementations, the compiler may determine the start address of one of the N functions in two manners. Manner 1: The compiler parses out the start address of one of the N functions when parsing the N functions. Manner 2: The compiler parses out start addresses of all functions in an initial compilation phase, and when parsing the N functions, the compiler searches the start addresses that are previously parsed out, to determine the start address of one of the N functions. In this way, program running time can be reduced. Likewise, the compiler may determine the start address of the one or more global variables in two manners. Manner 1: The compiler parses out the start address of the one or more global variables when parsing the one or more global variables. Manner 2: The compiler parses out start addresses of all global variables in the initial compilation phase, and when parsing the one or more global variables, the compiler searches the start addresses that are of the global variables and that are previously parsed out, to determine the start address of the one or more global variables.

When N is equal to 1, that is, one function corresponds to one start address, the compiler prefetches data associated with one or more global variables of the function.

When N is greater than 1, that is, a plurality of functions may share one start address, the prefetch engine may not only prefetch, into the cache, data that is in the memory and that is corresponding to one or more global variables of one function, but may also prefetch, into the cache, data that is in the memory and that is corresponding to one or more global variables of the plurality of functions. Optionally, the plurality of functions may be a plurality of functions related to a specific service. For example, to implement a special service, the service needs to use the plurality of functions. In this way, the data that is in the memory and that is corresponding to the one or more global variables of the plurality of functions may be prefetched into the cache by using one start address, so that data prefetching efficiency is further improved.

In some implementations, the compiler may directly send the determined start address of one of the N functions and the determined start address of the one or more global variables to the prefetch engine, so that the prefetch engine prefetches the data in the memory into the cache. Further, the compiler may store the start address of one of the N functions and the start address of the one or more global variables in a form of text or in a form of a binary file, so that the prefetch engine reads the start address of one of the N functions and the start address of the one or more global variables. Optionally, the compiler may store the start address of the N functions, the start address of the one or more global variables, and identification information of the prefetching time in a form of text or in a binary form, so that the prefetch engine reads the start address of one of the N functions, the start address of the one or more global variables, and the identification information of the prefetching time. For example, the identification information of the prefetching time may be a first identifier, a second identifier, or a third identifier. The first identifier is used to indicate that the prefetch engine prefetches, when reading the start address of one of the N functions, the data associated with the one or more global variables into the cache. The second identifier is used to indicate that the prefetch engine prefetches, before the first time period in which the prefetch engine reads the start address of one of the N functions, the data associated with the one or more global variables into the cache. The third identifier is used to indicate that the prefetch engine prefetches, after the second time period in which the prefetch engine reads the start address of one of the N functions, the data associated with the one or more global variables into the cache.

In some implementations, the N functions and the one or more global variables of the N functions may be simultaneously obtained, or may be separately obtained.

In some implementations, the one or more global variables includes M structure member variables, and M is an integer greater than or equal to 1.

In this way, a prior-art operation of prefetching, by inserting a prefetch instruction into a function, data associated with M structure member variables can be avoided. In addition, in the prior art, M prefetch instructions are required to prefetch the data that is in the memory and that is associated with the M structure member variables. In this way, program running time is increased. In addition, a prefetching time of the M structure member variables is specified only by a programmer, and it is difficult to ensure that a compilation and scheduling time of the compiler is in coordination with the prefetching time of the M structure member variables that is specified by the programmer. Consequently, a hit rate of the cache cannot be ensured. For example, when the prefetch instructions of the M structure member variables are inserted excessively early, and the data is prefetched into the cache excessively early, the data may be replaced before a CPU accesses the cache. When the prefetch instructions of the M structure member variables are inserted excessively late, a delay is caused when the CPU accesses the cache.

In some implementations, the determining a start address of one of the N functions and a start address of the one or more global variables, so that the prefetch engine prefetches, into a cache according to the start address of one of the N functions and the start address of the one or more global variables, data that is in the memory and that is associated with the one or more global variables includes: parsing at least one structure member variable used in the N functions, where the M structure member variables include the at least one structure member variable; and determining an address offset of each of the at least one structure member variable relative to the start address of the one or more global variables, so that the prefetch engine prefetches, into the cache according to the start address of one of the N functions, the start address of the one or more global variables, and the address offset of each of the at least one structure member variable, data that is in the memory and that is associated with the at least one structure member variable.

In this way, the structure member variable used in the N functions may be parsed out according to an actual requirement of the N functions. The prefetch engine prefetches the data associated with the structure member variable used in the N functions, instead of blindly prefetching, into the cache, data associated with all the M structure member variables of the one or more global variables, so that the prefetching efficiency can be improved, and the hit rate of the cache can be further improved.

In some implementations, the determining a start address of one of the N functions and a start address of the one or more global variables, so that the prefetch engine prefetches, into a cache according to the start address of one of the N functions and the start address of the one or more global variables, data that is in the memory and that is associated with the one or more global variables includes: parsing at least one structure member variable used in the N functions, where the M structure member variables include the at least one structure member variable; determining an address offset of each of the at least one structure member variable relative to the start address of the one or more global variables; and determining, according to the address offset of each of the at least one structure member variable, a cache line index number of each of the at least one structure member variable in the memory, so that the prefetch engine prefetches the data in the memory according to the start address of one of the N functions, the start address of the one or more global variables, and the cache line index number of each structure member variable in the memory.

In this embodiment of this application, the compiler may further map the address offset of each structure member variable to a cache line index number. The compiler stores the start address of one of the N functions, the start address of the one or more global variables, and the cache line index number in the text or the binary file. The prefetch engine prefetches, into the cache according to the start address of one of the N functions, the start address of the one or more global variables, and the cache line index number, the data that is in the memory and that is associated with the at least one structure member variable.

In some implementations, before the determining an address offset of each of the at least one structure member variable relative to the start address of the one or more global variables, the method further includes: parsing, by the compiler, the M structure member variables, to obtain an address offset of each of the M structure member variables relative to the start address of the one or more global variables. The determining an address offset of each of the at least one structure member variable relative to the start address of the one or more global variables includes: determining the address offset of each of the at least one structure member variable relative to the start address of the one or more global variables from the address offset of each of the M structure member variables relative to the start address of the one or more global variables.

In this embodiment of this application, the compiler may parse, in advance, the address offset of each of the M structure member variables relative to the start address of the one or more global variables. When learning, through parsing, that only the at least one of the M structure member variables is used in the N functions, the compiler may search the address offset of each of the M structure member variables for an address offset of the at least one structure member variable. Certainly, the compiler may alternatively parse an address offset of the at least one structure member variable relative to the one or more global variables when parsing the at least one structure member variable used in the N functions.

In some implementations, before obtaining the N functions and the one or more global variables of the N functions, the compiler performs the following operations in the compilation process: obtaining P functions and at least one global variable of each of the P functions, where the P functions include the N functions, P is greater than or equal to 1, and P is an integer greater than or equal to N; parsing a start address of each of the P functions; and parsing a start address of each of the at least one global variable of each of the P functions. The obtaining N functions and a one or more global variables of the N functions includes: determining the N functions from the P functions; and determining the one or more global variables from at least one global variable of the N functions. The determining a start address of one the N functions includes: determining the start address of one of the N functions from the start address of each of the P functions. The determining a start address of the one or more global variables includes: determining the start address of the one or more global variables from the start address of each global variable.

In this embodiment of this application, in an entire program running process, the P functions may be included, and each of the P functions includes at least one global variable. The compiler parses the start address of each of the P functions, and determines the start address of one of the N functions from the start address that is of each function and that is parsed out. The compiler further needs to parse a start address of one of the N functions of at least one global variable of the P functions, and obtain the start address of the one or more global variables of the N functions from the start address of each global variable through matching. The compiler may parse out, in the initial compilation phase, the P functions and the start address of the at least one global variable corresponding to each of the P functions, to form a mapping table. When parsing the N functions, the compiler parses the one or more global variables used in the N functions, and searches the mapping table for the start address of the one or more global variables.

In some implementations, the obtaining N functions and a one or more global variables of the N functions includes:
receiving, by the compiler in the compilation process, compilation indication information, and obtaining the N functions and the one or more global variables of the N functions according to the compilation indication information, where the compilation indication information is used to indicate the N functions and the one or more global variables of the N functions, and/or the compilation indication information is used to indicate the N functions and a global variable that is not used in the N functions.

When the compilation indication information indicates the N functions and the one or more global variables of the N functions, the compiler parses the N functions and the one or more global variables of the N functions. When the compilation indication information indicates the N functions and the global variable that is not used in the N functions, the compiler parses the N functions and a global variable other than the global variable that is not used in the N functions. When the compilation indication information indicates not only the N functions but also the one or more global variables of the N functions and the global variable that is not used in the N functions, the compiler parses the one or more global variables of the N functions. That is, the compilation indication information may indicate the one or more global variables that is used in the N functions, and may indicate a global variable that is not used in the N functions. Specifically, a user may configure the one or more global variables that is used in the N functions and the global variable that is not used in the N functions.

Optionally, the compilation indication information may also indicate the P functions and a global variable used in each of the P functions, and/or the compilation indication information may indicate the P functions and a global variable that is not used in each of the P functions.

Alternatively, in addition to indicating a correspondence between a function and a global variable, the compilation indication information may indicate a correspondence between a function and a structure member variable. For example, the compilation indication information may indicate a structure member variable used in the N functions, and a structure member variable that is not used in the N functions. In this way, the compiler parses, in a parsing process, only an address offset of a structure member variable that is used in a function and that is relative to a global variable, and the like.

Optionally, the compilation indication information may be inserted before a function header in a form of a command line. For example, the compilation indication information is inserted before the function header, and is used to indicate a function and a global variable of the function that need to be analyzed by the compiler. The compilation indication information may indicate one function and a global variable of the function, or may indicate a global variable shared by a plurality of functions. Specifically, the user may configure whether the compilation indication information indicates one function or a plurality of functions. When the user configures in such a manner that the compilation indication information indicates one function, the function corresponds to one start address. When the user configures in such a manner that the compilation indication information indicates a plurality of functions, the plurality of functions correspond to one start address.

In addition, the compilation indication information may also indicate the correspondence between a function and a global variable or between a function and a structure member variable. For example, one or more global variables are configured for one function, or one or more structure member variables are configured for one function, or one or more structure member variables are configured for one global variable. The compiler parses, according to the correspondence, the function and the global variable corresponding to the function or the structure member variable corresponding to the function. Optionally, the compilation indication information may be determined by the user.

In some implementations, the obtaining N functions and a one or more global variables of the N functions includes:
reading, by the compiler in the compilation process, a first correspondence and/or a second correspondence from a text file, and obtaining the N functions and the one or more global variables of the N functions according to the first correspondence and/or the second correspondence, where the first correspondence is used to indicate the N functions and the one or more global variables of the N functions, and/or the second correspondence is used to indicate the N functions and a global variable that is not used in the N functions.

In this embodiment of this application, a plurality of functions and a global variable of the plurality of functions that needs to be analyzed may be stored in the text file in a form of a list. There may be a correspondence between a function and a global variable that needs to be analyzed or a global variable that does not need to be analyzed. The one or more global variables of the N functions that needs to be analyzed is represented by using the first correspondence, and a variable of the N functions that does not need to be analyzed is represented by using the second correspondence. When parsing the N functions, the compiler searches the list in the text file for the one or more global variables of the N functions according to the first correspondence and/or the second correspondence. Certainly, the compiler may parse, in advance, start addresses in the list that are of the plurality of functions and a start address of the global variable corresponding to the plurality of functions. During execution of the N functions, the start addresses parsed out in advance are searched for the start address of one of the N functions. In this way, centralized management can be implemented, and operation complexity can be reduced.

Optionally, the correspondence between a function and a global variable and a correspondence between a global variable and a structure member variable may also be stored in the text file in the form of a list. That is, both the one or more global variables of the N functions and a structure member variable that is of the one or more global variables and that is used in the N functions may be prestored in the text file in the form of a list. When parsing the N functions, the compiler reads, from the text file, the N functions, the one or more global variables of the N functions, and the structure member variable that is of the one or more global variables and that is used in the N functions.

Specifically, the first correspondence may be a list including a global variable used in a function. For example, a global variable a is used in a first function, and the global variable a is used in a second function. The variable used in the first function and the second function is stored in a form of a list. The prefetch engine needs to prefetch, into the cache, data that is in the memory and that is associated with the global variable a used in the first function and the second function, for example, a may be the one or more global variables. The compiler finds the first function, the second function, and the global variable a of the two functions by searching the list. Similarly, the second correspondence may be a list including a global variable that is not used in a function. In this way, the centralized management can be implemented, and the operation complexity can be reduced.

In some implementations, after the determining a start address of the one or more global variables, the method further includes: outputting, by the compiler, the start address of one of the N functions and the start address of the one or more global variables to the text file or the binary file, so that the prefetch engine reads the start address of one of the N functions and the start address of the one or more global variables that are in the text file or the binary file, and the prefetch engine prefetches, into the cache according to the start address of one of the N functions and the start address of the one or more global variables that are read, the data that is in the memory and that is associated with the one or more global variables.

The compiler stores the start address of one of the N functions and the start address of the one or more global variables in the text file or the binary file. The prefetch engine reads the start address of one of the N functions and the start address of the one or more global variables from the text file or the binary file, determines the data prefetching time according to the start address of one of the N functions, and prefetches, at the determined prefetching time, data that is in the memory and that is corresponding to the start address of the one or more global variables. Certainly, prefetching information such as a cache line index number or an address offset of a structure member variable is stored in the text file or the binary file, so that the prefetch engine prefetches the data in the memory according to the prefetching information in the text file or the binary file.

In some implementations, that the prefetch engine prefetches, into the cache according to the start address of one of the N functions and the start address of the one or more global variables that are read, the data that is in the memory and that is associated with the one or more global variables includes: When reading the start address of one of the N functions, the prefetch engine prefetches, into the cache, the data that is in the memory and that is associated with the one or more global variables at the start address of the one or more global variables; or before the first time period in which the prefetch engine reads the start address of one of the N functions, the prefetch engine prefetches, into the cache, the data that is in the memory and that is associated with the one or more global variables at the start address of the one or more global variables; or after the second time period in which the prefetch engine reads the start address of one of the N functions, the prefetch engine prefetches, into the cache, the data that is in the memory and that is associated with the one or more global variables at the start address of the one or more global variables.

The data that is in the memory and that is associated with the one or more global variables may be prefetched into the cache when the prefetch engine reads the start address of the one or more global variables, or in the first time period before the prefetch engine reads the start address of the one or more global variables, or in the second time period after the prefetch engine reads the start address of the global variable, so that the data prefetching flexibility is further improved.

In some implementations, the obtaining one or more global variables of the N functions includes: parsing a partition of the N functions, where the partition includes a hot partition and a cold partition; and obtaining the one or more global variables from the hot partition.

In this embodiment of this application, the compiler may parse the partition of the N functions, and the partition of N functions includes the hot partition and the cold partition. The compiler may screen out the cold partition, and obtain the one or more global variables in the hot partition. In this way, the data prefetching efficiency can be improved. Only data corresponding to a global variable in a frequently used partition of a function needs to be prefetched into the cache, and therefore the data prefetching efficiency can be further improved.

Optionally, the hot partition is used to indicate that the partition of the N functions is frequently accessed, and the cold partition is used to indicate that the partition of the N functions is accessed for a relatively small quantity of times. For example, in a specific time period, when a quantity of times for which a first partition of the N functions is accessed exceeds a preset threshold, it is considered that the first partition is a hot partition. In a specific time period, when a quantity of times for which a second partition of the N functions is accessed is less than a preset threshold, it is considered that the second partition is a cold partition.

In some implementations, after the one or more global variables of the N functions is obtained, the compiler performs the following operations in the compilation process: obtaining a second global variable of the N functions; and determining an access sequence of the one or more global variables and the second global variable, so that the prefetch engine prefetches, into the cache according to the access sequence, the data that is in the memory and that is associated with the one or more global variables.

In this embodiment of this application, the compiler may not only parse out the one or more global variables and the second global variable of the N functions, but may also parse out the sequence of the one or more global variables and the second global variable in the program running process with reference to a compilation control flow information. The prefetch engine may prefetch the data associated with the one or more global variables into the cache according to the sequence. If the one or more global variables is accessed before the second global variable, the prefetch engine first prefetches the data associated with the one or more global variables into the cache; if the one or more global variables is accessed after the second global variable, the prefetch engine first prefetches data associated with the second global variable into the cache, and then prefetches the data associated with the one or more global variables into the cache. In this way, data first stored in the cache is first accessed by the CPU, so that the prefetching efficiency can be improved, storage efficiency of the cache can be further improved, and the hit rate of the cache can also be improved.

In some implementations, the compiler performs the following operations in the compilation process: obtaining a third global variable of the N functions; and determining a cache line e index number of the one or more global variables in the memory and a cache line index number of the third global variable in the memory, so that the prefetch engine prefetches, into the cache according to the cache line index numbers, the data that is in the memory and that is associated with the one or more global variables and data that is in the memory and that is associated with the third global variable.

If two global variables belong to one cache line index number, only one cache line is required so as to prefetch data associated with the two global variables. However, in the prior art, even if two global variables belong to one cache line index number, two cache lines are required to prefetch data associated with the two global variables. Therefore, a quantity of prefetching times can be further reduced, and the prefetching efficiency can be improved.

In some implementations, the N functions are hotspot functions, and the one or more global variables is a hotspot global variable.

In this embodiment of this application, the hotspot function is used to indicate a frequently used function. For example, in a specific time period, when a quantity of times for which the N functions are called exceeds a first threshold, it is considered that the N functions are hotspot functions. The hotspot global variable is used to indicate a frequently used global variable. For example, in a specific time period, when a quantity of times for which the one or more global variables is called exceeds a second threshold, it is considered that the one or more global variables is a hotspot global variable. That is, in this embodiment of this application, the compiler parses the hotspot function and the hotspot global variable. In this way, the data prefetched by the prefetch engine is data associated with a frequently called hotspot global variable in the hotspot function, so that the prefetching efficiency can be improved, and the hit rate of the cache can be further improved.

In some implementations, the prefetch engine may execute a prefetch instruction. For example, the compiler may determine a prefetching address in a code generation process, and output the prefetching address to the text file or the binary file. When reading the prefetching address, the prefetch engine prefetches data that is in the memory and that is corresponding to the prefetching address. In this way, the compiler notifies the prefetch engine of the prefetching address, and the prefetch engine can precisely prefetch the data in the memory according to the prefetching address. The compiler and the prefetch engine perform execution in parallel, and data is prefetched by using software in coordination with hardware. In this way, running complexity of the compiler can be reduced, the data prefetching efficiency can be improved, and the hit rate of the cache can be further improved.

According to a second aspect, a data prefetching method is provided, and the method includes: obtaining, by a prefetch engine, a start address of one of N functions and a start address of one or more global variables of the N functions, where the start addresses are determined by a compiler, and N is an integer greater than or equal to 1, the N functions relating to a specific service; and when reading a start address of one of the N functions, prefetching into a cache, by the prefetch engine, according to the start address of the one of N functions and the start address of the one or more global variables of the N functions, data that is in a memory and that is associated with the one or more global variables, wherein there is an address mapping relationship between the start address of the one or more global variables and a start address of the data.

In some implementations, the obtaining a start address of one of N functions and a start address of one or more global variables of the N functions includes: reading the start address of one of the N functions and the start address of the one or more global variables that are input by the compiler into the text file or the binary file; and the prefetching, into a cache according to the start address of one of the N functions and the start address of the one or more global variables of the N functions, data that is in a memory and that is associated with the one or more global variables includes: prefetching, into the cache according to the start address of one of the N functions and the start address of the one or more global variables that are read, the data that is in the memory and that is associated with the one or more global variables.

In some implementations, the prefetching, into the cache according to the start address of one of the N functions and the start address of the one or more global variables that are read, data that is in the memory and that is associated with the one or more global variables includes: when the start address of one of the N functions that is in the text file or the binary file is read, prefetching, into the cache, the data that is in the memory and that is associated with the one or more global variables at the start address of the one or more global variables; or before a first time period in which the start address of one of the N functions that is in the text file or the binary file is read, prefetching, into the cache, the data that is in the memory and that is associated with the one or more global variables at the start address of the one or more global variables; or after a second time period in which the start address of one of the N functions that is in the text file or the binary file is read, prefetching, into the cache, the data that is in the memory and that is associated with the one or more global variables at the start address of the one or more global variables.

In some implementations, the prefetch engine is further specifically configured to prefetch, into the cache according to the start address of one of the N functions, the start address of the one or more global variables, and an address offset of each of at least one structure member variable, data that is in the memory and that is associated with the at least one structure member variable.

In some implementations, the prefetch engine is specifically configured to prefetch data in the memory according to the start address of one of the N functions, the start address of the one or more global variables, and a cache line index number of each structure member variable in the memory.

In some implementations, the prefetch engine is further specifically configured to: read the start address of one of the N functions and the start address of the one or more global variables that are in the text file or the binary file, and prefetch, into the cache according to the start address of one of the N functions and the start address of the one or more global variables that are read, the data that is in the memory and that is associated with the one or more global variables.

In some implementations, the prefetch engine is further specifically configured to: prefetch, into the cache according to an access sequence, the data that is in the memory and that is associated with the one or more global variables, where the access sequence is an access sequence, determined by the compiler, of the one or more global variables and the second global variable.

According to a third aspect, a data prefetching apparatus is provided, to perform the method according to any one of the first aspect or the possible implementations of the first aspect.

According to a fourth aspect, a data prefetching apparatus is provided, to perform the method according to any one of the second aspect or the possible implementations of the second aspect.

According to a fifth aspect, a data prefetching system is provided, including the apparatus according to any one of the third aspect or the possible implementations of the third aspect and the apparatus according to any one of the fourth aspect or the possible implementations of the fourth aspect.

It can be learned that the compiler first obtains the N functions and the one or more global variables of the N functions, and then determines the start address of one of the N functions and the start address of the one or more global variables. The prefetch engine prefetches, into the cache according to the start address of one of the N functions and the start address of the one or more global variables, the data that is in the memory and that is associated with the one or more global variables. The start address of one of the N functions may be understood as the prefetching time for prefetching the data. The prefetch engine and the compiler may perform execution in parallel. The prefetching time is the start address of one of the N functions and does not depend on the software prefetch instruction in the prior art, so that the prefetching flexibility is improved.

### BRIEF DESCRIPTION OF DRAWINGS

FIG. 1 is a schematic diagram of a computer system architecture according to an embodiment of this application;
FIG. 2 is a schematic diagram of an application scenario according to an embodiment of this application;
FIG. 3 is a schematic diagram of a data prefetching method according to an embodiment of this application;
FIG. 4 is a schematic diagram of a data prefetching apparatus according to an embodiment of this application;
FIG. 5 is a schematic diagram of another data prefetching apparatus according to an embodiment of this application;
FIG. 6 is a schematic diagram of a data prefetching system according to an embodiment of this application;
FIG. 7 is a schematic diagram of a data prefetching apparatus according to an embodiment of this application;
FIG. 8 is a schematic diagram of another data prefetching apparatus according to an embodiment of this application; and
FIG. 9 is a schematic diagram of another data prefetching system according to an embodiment of this application.

### DESCRIPTION OF EMBODIMENTS

It should be understood that a prefetching data method in embodiments of this application may be applied to a single-core or multi-core computer system, and the multi-core computer system may be a general-purpose multi-core computer system. A CPU in the multi-core computer system may include a plurality of cores, and the plurality of cores may communicate with each other by using a system bus or a crossbar. The multi-core computer system may include a cache shared by the plurality of cores in the CPU.

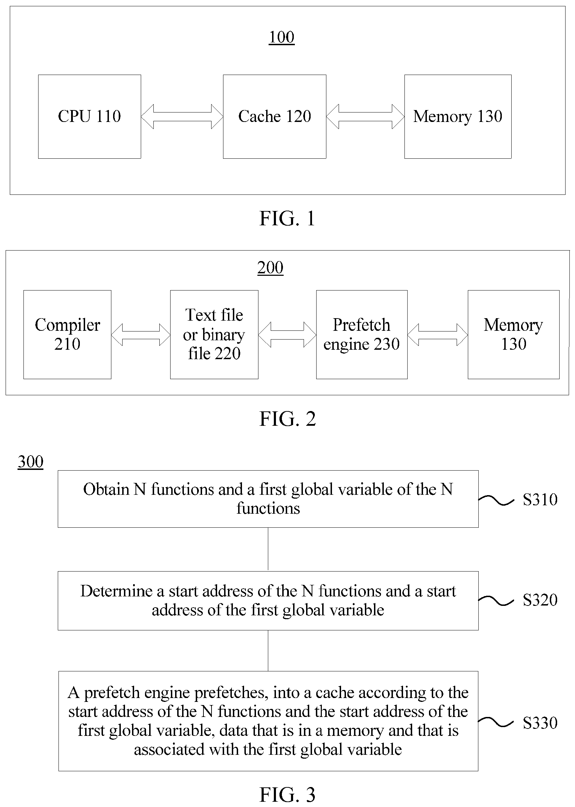

FIG. 1 is a schematic diagram of a computer system architecture 100 according to an embodiment of this application. The computer system architecture 100 includes a central processing unit (CPU) 110, a cache 120, and a memory 130.

The CPU 110 is configured to obtain frequently used data from the cache 120 for processing, or may directly obtain data from the memory 130 for processing. When the CPU needs to access data in the memory, the CPU first queries whether the data that needs to be accessed by the CPU is in the cache 120 and whether the data that needs to be accessed expires. If the data that needs to be accessed is in the cache 120 and has not expired, the data is read from the cache 120. That the data that needs to be accessed by the CPU is in the cache 120 is referred to as a hit, and that the data that needs to be accessed by the CPU is not in the cache 120 is referred to as a miss.

The cache 120 is configured to store data prefetched from the memory 130, so that the CPU 110 obtains the data, and a delay in obtaining the data from the memory 130 by the CPU 110 is reduced.

The memory 130 is configured to store data, and frequently used data in the memory 130 is stored in the cache 120.

A higher hit rate of the cache 120 indicates a better data prefetching effect. In addition, the cache may include an instruction cache and a data cache.

FIG. 2 is a schematic diagram of an application scenario 200 according to an embodiment of this application. The application scenario 200 includes a compiler 210, a text file or a binary file 220, a prefetch engine 230, and a memory 130.

The compiler 210 is configured to: obtain a function and a global variable of the function, and parse a start address of the function and a start address of the global variable of the function. The compiler 210 may further parse a cold partition and a hot partition of the function. The compiler 210 may further parse an access sequence of variables of the function. Information such as the start addresses, the cold partition and the hot partition, and the access sequence that are parsed out by the compiler may be referred to as prefetching information. The compiler 210 may output the prefetching information to the text file or the binary file 220, or certainly, the compiler 210 may directly output the prefetching information to the prefetch engine 230, so that the prefetch engine 230 prefetches data in the memory 130 into a cache 120 according to the prefetching information.

The text file or the binary file 220 is configured to receive and store the prefetching information that is output by the compiler 210, so that the prefetch engine 230 reads the prefetching information.

The prefetch engine 230 is configured to: read the prefetching information stored in the text file or the binary file 220, and prefetch data from the memory 130 according to the read prefetching information.

The memory 130 is configured to store data associated with a variable, so that the prefetch engine 230 reads the data.

Therefore, in this embodiment of this application, the compiler 210 analyzes the prefetching information of the function, and the prefetch engine 230 prefetches the data in the memory 130 according to the prefetching information. The compiler 210 and the prefetch engine 230 may perform execution in parallel, so that data prefetching efficiency can be further improved. In addition, a data prefetching time is the prefetching information parsed out by the compiler 210. In this way, the prefetching time does not depend on a software prefetch instruction in the prior art, and prefetching flexibility is improved.

FIG. 3 is a schematic diagram of a data prefetching method 300 according to an embodiment of this application. The method 300 is applied to a computer system. For example, the computer system may be an embedded system. The computer system includes a prefetch engine 230, a memory 130, and a compiler 210. The method 300 includes S310, S320, and S330. The compiler 210 performs S310 and S320 in a compilation process, and the prefetch engine 230 performs S330. Details are as follows:
S310. Obtain N functions and a first global variable of the N functions, where N is an integer greater than or equal to 1.
S320. Determine a start address of the N functions and a start address of the first global variable.
S330. The prefetch engine 230 prefetches, into a cache 120 according to the start address of the N functions and the start address of the first global variable that are determined by the compiler 210, data that is in the memory 130 and that is associated with the first global variable.

Optionally, S310 and S320 may be completed in a linking process. In S310, the N functions and the first global variable of the N functions may be simultaneously obtained or may be separately obtained. Likewise, in S320, the start address of the N functions and the start address of the first global variable may be simultaneously determined or may be separately determined. When the start address of the N functions and the start address of the first global variable are separately determined, the start address of the N functions may be first determined and then the start address of the first global variable is determined, or the start address of the first global variable may be first determined and then the start address of the N functions is determined. This is not limited in this embodiment of this application.

It should be understood that the start address of the N functions may be a start address shared by the N functions, and the start address of the N functions may be understood as a start address of one of the N functions. The start address of the N functions is used as a data prefetching time to trigger the prefetch engine 230 to prefetch the data in the memory 130 into the cache 120. The start address of the first global variable is an address that is used by the prefetch engine to prefetch, into the cache 120, the data that is in the memory 130 and that is associated with the first global variable. That is, the start address of the first global variable may be a start address, parsed out by the compiler, of the data that is in the memory 130 and that is associated with the first global variable, or may be a start address that is of the first global variable in a program and that is parsed out by the compiler. There is a mapping relationship between the start address of the first global variable in the program and the start address, in the memory 130, of the data associated with the first global variable. The prefetch engine 230 determines, according to the start address of the first global variable in the program and the mapping relationship, the start address, in the memory 130, of the data associated with the first global variable, and then prefetches, into the cache 120, the data that is in the memory 130 and that is associated with the first global variable.

Specifically, program personnel may determine, in a development process, that the N functions may be functions related to a specific service. Therefore, all variables of the N functions may be prefetched from the memory 130 into the cache 120 in a data prefetching process. The compiler 210 may obtain the N functions and the first global variable of the N functions in the compilation process. Then the compiler 210 obtains the start address of the N functions and the start address of the first global variable in the memory 130 according to the N functions and the first global variable. The start address of the N functions may be understood as a prefetching time of the prefetch engine 230. The prefetch engine 230 and the compilation 210 may perform execution in parallel. The prefetching time may depend on the start address of the N functions. In this way, the prefetching time does not depend on a software prefetch instruction in the prior art, and prefetching flexibility is improved.

Before or after reading the start address of the N functions, the prefetch engine 230 prefetches the data in the memory 130 according to the start address of the first global variable, so as to avoid limitation caused by performing prefetching from a function by using a prefetch instruction. In addition, in the prior art, a data prefetching time in the prefetch instruction is specified in the function by a developer. In this embodiment of this application, the data may be prefetched in preset time before a function starts to be executed, or the data may be prefetched when the address of the N functions is parsed out, or the data may be prefetched in preset time after the address of the N functions is parsed out. The prefetching time is not limited to a function, and a specific prefetching time may be determined according to a specific rule. In this way, data prefetching flexibility can be further improved.

More specifically, the prefetch engine 230 can prefetch the data in the memory 130 into the cache 120 once the prefetch engine 230 obtains the start address of the N functions and the start address of the first global variable. For example, the prefetch engine 230 may determine the prefetching time according to a current program running speed. If the current program running speed is relatively fast, the data may start to be prefetched before a first time period in which the start address of the N functions is read; or if the current program running speed is relatively slow, the data may start to be prefetched after a second time period in which the start address of the N functions is read; or the prefetch engine 230 may start to prefetch the data when the start address of the N functions is read. For another example, the prefetch engine 230 may determine the data prefetching time according to a size of the cache 120 and a life cycle of the data in the cache 120. For still another example, the compiler 210 may notify the prefetch engine 230 of the prefetching time, and the prefetch engine 230 prefetches the data according to the prefetching time sent by the compiler 210. Therefore, in comparison with the prior art, the prefetching flexibility can be further improved.

Optionally, when N is equal to 1, that is, one function corresponds to one start address, the prefetch engine 230 prefetches data associated with a first global variable of the function. When N is greater than 1, that is, a plurality of functions may share one start address, the prefetch engine 230 prefetches data associated with a first global variable of the plurality of functions. That is, the prefetch engine 230 may not only prefetch, into the cache 120, data that is in the memory 130 and that is corresponding to a global variable of one function, but may also prefetch, into the cache 120, data that is in the memory 130 and that is corresponding to a global variable of the plurality of functions. Optionally, the plurality of functions may be a plurality of functions related to a specific service. For example, to implement a special service, the service needs to use the plurality of functions. In this way, the data that is in the memory 130 and that is corresponding to the first global variable of the plurality of functions may be prefetched into the cache 120 by using one start address, so that prefetching efficiency is further improved.

Further, S320 includes: The compiler 210 parses the start address of the N functions when parsing the N functions. Alternatively, S320 includes: The compiler 210 parses start addresses of all functions in an initial compilation phase, and when parsing a first function, the compiler 210 searches the start addresses that are previously parsed out, to determine the start address of the N functions. In this way, program running time can be reduced. S320 includes: The compiler 210 parses the start address of the first global variable when parsing the first global variable. Alternatively, S320 includes: The compiler 210 parses start addresses of all global variables in the initial compilation phase, and when parsing the first global variable, the compiler 210 searches the start addresses that are previously parsed out, to determine the start address of the first global variable.

In an optional embodiment, after the determining a start address of the first global variable, the method 300 further includes: The compiler 210 outputs the start address of the N functions and the start address of the first global variable to a text file or a binary file 220, and the prefetch engine 230 reads the start address of the N functions and the start address of the first global variable that are in the text file or the binary file 220, and prefetches, into the cache 120 according to the start address of the N functions and the start address of the first global variable that are read, the data that is in the memory 130 and that is associated with the first global variable.

The compiler 210 stores the start address of the N functions and the start address of the first global variable in the text file or the binary file 220. The prefetch engine 230 reads the start address of the N functions and the start address of the first global variable from the text file or the binary file 220, determines the data prefetching time according to the start address of the N functions, and prefetches, at the determined prefetching time, data that is in the memory 130 and that is corresponding to the start address of the first global variable. Certainly, prefetching information such as a cache line index number or an address offset of a structure member variable is stored in the text file or the binary file, so that the prefetch engine 230 prefetches the data in the memory 130 according to the prefetching information in the text file or the binary file 220.

In an optional embodiment, that the prefetch engine 230 prefetches, into the cache 120 according to the start address of the N functions and the start address of the first global variable that are read, the data that is in the memory 130 and that is associated with the first global variable includes: when reading the start address of the N functions that is in the text file or the binary file 220, the prefetch engine 230 prefetches, into the cache 120, the data that is in the memory 130 and that is associated with the first global variable at the start address of the first global variable; or before the first time period in which the prefetch engine 230 reads the start address of the N functions that is in the text file or the binary file 220, the prefetch engine 230 prefetches, into the cache 120, the data that is in the memory 130 and that is associated with the first global variable at the start address of the first global variable; or after the second time period in which the prefetch engine 230 reads the start address of the N functions that is in the text file or the binary file 220, the prefetch engine 230 prefetches, into the cache 120, the data that is in the memory 130 and that is associated with the first global variable at the start address of the first global variable.

Specifically, the compiler 210 outputs the start address of the N functions and the start address of the first global variable, and may store the start address of the N functions and the start address of the first global variable in a form of text or in the binary file. When the prefetch engine 230 obtains the start address of the N functions and the start address of the first global variable from the text or the binary file, and the prefetch engine 230 reads the start address of the N functions, the prefetch engine 230 prefetches, according to the start address of the first global variable, the data associated with the first global variable from the memory 130 into the cache 120. Therefore, in a coordinative prefetching manner of performing analysis by using software and performing obtaining by using hardware, the data prefetching flexibility can be improved. The software parses out an actual program running status and then outputs the actual program running status to the text or the binary file, so that the hardware reads the actual program running status. The hardware prefetches the data in the memory 130 according to the start address of the N functions and the start address of the first global variable. In addition, the hardware may expand the memory 130 of the cache 120. In this way, a hit rate of the cache 120 can be further improved.

Further, the compiler 210 may store identification information of the prefetching time in the text file or the binary file 230. When reading the identification information of the prefetching time, the prefetch engine 230 prefetches, into the cache 120 according to the identification information of the prefetching time, the data that is in the memory 130 and that is associated with the first global variable. For example, the identification information of the prefetching time may be a first identifier, a second identifier, or a third identifier. The first identifier is used to indicate that the prefetch engine 230 prefetches the data associated with the first global variable into the cache 120 when reading the start address of the N functions. The second identifier is used to indicate that the prefetch engine 230 prefetches the data associated with the first global variable into the cache 120 before the first time period in which the prefetch engine 230 reads the start address of the N functions. The third identifier is used to indicate that the prefetch engine 230 prefetches the data associated with the first global variable into the cache 120 after the second time period in which the prefetch engine 230 reads the start address of the N functions.

It should be understood that, in this embodiment of this application, after the compiler 210 determines the start address of the N functions and the start address of the first global variable, the prefetching time may be determined by the compiler 210 or may be determined by the prefetch engine 230, or may be determined according to a specific rule or may be specified according to a protocol. This is not limited in this embodiment of this application.

It should also be understood that the first global variable of the N functions may be one global variable or a plurality of global variables. This is not limited in this embodiment of this application. Certainly, the first global variable is not limited to only a global variable of the N functions. That is, two different functions may have a same global variable, or two different functions may have different global variables. This is not limited in this embodiment of this application.

Further, when the data that is in the memory 130 and that is corresponding to the first global variable is prefetched, and the first global variable is also called in a second function other than the N functions, a CPU may directly obtain the data corresponding to the first global variable from the cache 120, so as to avoid a prior-art problem that the data needs to be obtained again when the data is required by another function, and reduce signaling overheads.

In this embodiment of this application, the first global variable of the N functions may be obtained, and the data that is in the memory 130 and that is corresponding to the first global variable of the N functions is prefetched; or only the N functions may be obtained, and data that is in the memory 130 and that is corresponding to all variables of the N functions is prefetched; or only the first global variable may be obtained, and the data that is in the memory 130 and that is corresponding to the first global variable is prefetched. This is not limited in this embodiment of this application.

For example, in an actual application process, a user may notify, by using an interface of the compiler 210, the compiler 210 of a function that needs to be analyzed. The compiler 210 may specify an interaction interface by using which the compiler 210 interacts with the user and the hardware, parse out a global variable that is used in the function, perform statistical classification on a cache line to which data of the identified global variable belongs, automatically generate a global symbol, and store cache line information and the function in the symbol, so that the hardware reads the cache line information and the function. The hardware customizes a peripheral of the prefetch engine 230, and the peripheral of the prefetch engine 230 is configured to prefetch data into the cache 120. Alternatively, the hardware may customize a compilation instruction to trigger the prefetch engine 230 to perform prefetching, and the prefetch engine 230 reads the prefetching information from the global symbol that is automatically generated by the compiler 210.

In an optional embodiment, the first global variable includes M structure member variables, and M is greater than or equal to 1.

Specifically, when the first global variable is a global structure member variable, the global structure member variable includes M structure member variables. The prefetch engine 230 may prefetch, into the memory 130 in advance according to the start address of the N functions and the start address of the first global variable, data that is in the memory 130 and that is associated with the M structure member variables. In this way, a prior-art operation of prefetching, by inserting a prefetch instruction into a function, the data associated with the M structure member variables can be avoided. In addition, in the prior art, a plurality of prefetch instructions are required to prefetch the data that is in the memory 130 and that is associated with the M structure member variables. In this way, program running time is increased. In addition, a prefetching time of the M structure member variables is specified only by a programmer, and it is difficult to ensure that a compilation and scheduling time of the compiler 210 is in coordination with the prefetching time of the M structure member variables that is specified by the programmer. Consequently, the hit rate of the cache 120 cannot be ensured either. For example, when the prefetch instructions of the M structure member variables are inserted excessively early, and the data is prefetched into the cache 120 excessively early, the data may be replaced before the CPU accesses the cache 120. When the prefetch instructions of the M structure member variables are inserted excessively late, a delay is caused when the CPU accesses the cache 120.

In an optional embodiment, S320 includes: parsing at least one structure member variable used in the N functions, where the M structure member variables include the at least one structure member variable. S330 includes: The prefetch engine 230 prefetches, into the cache 120 according to the start address of the N functions, the start address of the first global variable, and an address offset of each of the at least one structure member variable, data that is in the memory 130 and that is associated with the at least one structure member variable.

Specifically, the first global variable includes M structure member variables, but at least one of the M structure member variables may be used in the N functions. Therefore, the compiler 210 needs to parse a structure member variable used in the N functions. The compiler 210 learns, through parsing, that the at least one of the M structure member variables is used in the N functions, determines an address offset of each of the at least one structure member variable relative to the start address of the first global variable, and stores the start address of the N functions, the start address of the first global variable, and the address offset of each structure member variable relative to the start address of the first global variable in the text or the binary file, so that the prefetch engine 230 reads the start address of the N functions, the start address of the first global variable, and the address offset of each structure member variable relative to the start address of the first global variable. When reading the start address of the N functions, the prefetch engine 230 may prefetch data associated with each structure member variable into the cache 120 according to the address offset relative to the start address of the first global variable. In this way, the structure member variable used in the N functions may be parsed out according to an actual requirement of the N functions. Before the CPU accesses the data that is in the cache 120 and that is associated with the at least one structure member variable, the prefetch engine 230 may prefetch data associated with the structure member variable used in the N functions into the cache 120, so that the prefetching efficiency can be improved, and when the CPU accesses the cache 120, the cache 120 stores the data that is corresponding to the structure member variable and that is required by the CPU, so that the hit rate of the cache 120 can be further improved.

In an optional embodiment, the N functions are hotspot functions, and the first global variable is a hotspot global variable.

It should be understood that the hotspot function is used to indicate a frequently used function. For example, in a specific time period, when a quantity of times for which the N functions are called exceeds a first threshold, it is considered that the N functions are hotspot functions. The hotspot global variable is used to indicate a frequently used global variable. For example, in a specific time period, when a quantity of times for which the first global variable is called exceeds a second threshold, it is considered that the first global variable is a hotspot global variable. That is, in this embodiment of this application, the compiler 210 parses the hotspot function and the hotspot global variable. In this way, the data prefetched by the prefetch engine 230 is data associated with a frequently called hotspot global variable in the hotspot function, so that the prefetching efficiency can be improved, and the hit rate of the cache 120 can be further improved.

Optionally, the compiler 210 may learn, through parsing, whether a function is a hot function or a cold function. The hot function may be a function that needs to be frequently compiled by the compiler 210, and the cold function may be a function that is compiled by the compiler 210 for a relatively small quantity of times. For example, classification of the cold function and the hot function may be as follows: Within a specific time range, a function that is complied for a quantity of times greater than a specified third threshold is a hot function, and a function that is complied for a quantity of times less than the specified third threshold is a cold function.

In an optional embodiment, S320 includes: a variable includes the at least one structure member variable; determining an address offset of each of the at least one structure member variable relative to the start address of the first global variable; and determining, according to the address offset of each of the at least one structure member variable, a cache line index number of each of the at least one structure member variable in the memory 130. S330 includes: The prefetch engine 230 prefetches the data in the memory 130 according to the start address of the N functions, the start address of the first global variable, and the cache line index number of each structure member variable in the memory 130.

Specifically, after the compiler 210 may obtain the address offset of each of the at least one structure member variable of the first global variable relative to the first global variable, the compiler 210 maps the cache line index number of each structure member variable in the memory 130 with reference to a cache line length of a chip, the offset address of each structure member variable, and the start address of the first global variable. The compiler 210 stores the start address of the N functions, the start address of the first global variable, and the cache line index number in the text or the binary file. When two structure member variables have a same cache line index number, the compiler 210 returns one cache line index number to the prefetch engine 230. The prefetch engine 230 prefetches the data in the memory 130 according to the cache line index number, so that the prefetching efficiency is further improved, and a prior-art problem that only specific data can be fetched by using the prefetch instruction at a time and data of two structure member variables cannot be prefetched at a time is avoided.

For example, if eight structure member variables (separately numbered 1, 2, 3, 4, 5, 6, 7, and 8) are used in the N functions, cache line index numbers in the memory 130 that are of data corresponding to the eight structure member variables are determined according to an offset address of each structure member variable relative to the start address of the first global variable: Cache line index numbers of structure member variables that are numbered 1 and 2 are 1, cache line index numbers of structure member variables that are numbered 3, 4, 5, and 6 are 2, a cache line index number of a structure member variable that is numbered 7 is 3, and a cache line index number of a structure member variable that is numbered 8 is 4. The compiler 210 outputs start addresses, in the memory 130, of cache lines whose index numbers are 1, 2, 3, and 4 to the text file or the binary file 220. The prefetch engine 230 reads an index number in the text file or the binary file 220. The prefetch engine 230 can prefetch the data corresponding to the eighth structure member variables from the memory 130 by using four cache lines. However, in the prior art, eight cache lines are required to prefetch data corresponding to eight structure member variables. Therefore, in this embodiment of this application, a quantity of data prefetching times can be reduced, the data prefetching efficiency can be improved, and a data prefetching delay can be reduced.

In an optional embodiment, the method 300 further includes: The compiler 210 performs the following operations in the compilation process: obtaining a third global variable of the N functions; and determining a cache line index number of the first global variable in the memory 130 and a cache line index number of the third global variable in the memory 130, so that the prefetch engine 230 prefetches, into the cache 120 according to the cache line index numbers, the data that is in the memory 130 and that is associated with the first global variable and data that is in the memory 130 and that is associated with the third global variable.

Specifically, if there are a plurality of global variables, the compiler 210 determines a cache line index number of each global variable in the memory 130 according to the plurality of global variables, and the prefetch engine 230 prefetches the data in the memory 130 according to the cache line index number of each global variable in the memory 130.

In an optional embodiment, before the determining an address offset of each of the at least one structure member variable relative to the start address of the first global variable, the method 300 further includes: The compiler 210 parses the M structure member variables, to obtain an address offset of each of the M structure member variables relative to the start address of the first global variable. The determining an address offset of each of the at least one structure member variable relative to the start address of the first global variable includes: determining the address offset of each of the at least one structure member variable relative to the start address of the first global variable from the address offset of each of the M structure member variables relative to the start address of the first global variable.

Specifically, when the first global variable includes the M structure member variables, the compiler 210 needs to parse the address offset of each of the M structure member variables relative to the start address of the first global variable. When learning, through parsing, that only at least one of the M structure member variables is used in the N functions, the compiler 210 may search the address offset of each of the M structure member variables for an address offset of the at least one structure member variable.

Optionally, the compiler 210 may not only parse out an address, but also parse a layer of at least one structure member variable in a global structure member variable, for example, whether a structure member variable is a first-layer structure member variable, a second-layer structure member variable, or the like of the first global variable. For example, a global variable A includes three structure member variables A1, A2, and A3, and A1 is also a structure variable and includes four structure member variables A11, A12, A13, and A14. When parsing A11, the compiler 210 may output, to the text file or the binary file, information that A11 is a second-layer structure member variable.

In an optional embodiment, before obtaining the N functions and the first global variable of the N functions, the compiler 210 performs the following operations in the compilation process: obtaining P functions and at least one global variable of each of the P functions, where the P functions include the N functions, P is greater than or equal to 1, and P is greater than or equal to N; parsing a start address of each of the P functions; and parsing a start address of each of at least one global variable of each function. The obtaining N functions and a first global variable of the N functions includes: determining the N functions from the P functions; and determining the first global variable from at least one global variable of the N functions. The determining a start address of the N functions includes: determining the start address of the N functions from the start address of each of the P functions. The determining a start address of the first global variable includes: determining the start address of the first global variable from the start address of each global variable.

Specifically, in an entire program running process, the P functions may be included, and each of the P functions includes at least one global variable. The compiler 210 parses the start address of each of the P functions, and determines the start address of the N functions from at least one start address obtained after parsing. The compiler 210 further needs to parse a start address of each of the at least one global variable of the N functions, and obtain the start address of the first global variable from the start address of each global variable through matching. The compiler 210 may parse out, in the initial compilation phase, the P functions and the start address of the at least one global variable corresponding to each of the P functions, to form a mapping table. When parsing the N functions, the compiler 210 parses the first global variable used in the N functions, and searches the mapping table for the start address of the first global variable.

Optionally, a program developer may determine the P functions and the at least one global variable of each of the P functions according to a user operation habit. The P functions and the at least one global variable of each of the P functions may be stored in a form of a table, for example, a global variable library is generated. Still further, the P functions and the at least one global variable of each of the P functions may be specified by using a keyword. For example, the P functions and the at least one global variable of each of the P functions are specified by using a keyword attribute attribute smar_prefetch_var.

For example, a large quantity of global structure member variables are used in a wireless L2 service. For example, address offset information of a structure member variable of a global structure member variable g_dMACUserTable used in a MUM_RefreshRlcSharePam function in code 1382 is as follows:
q_dMACUserTable → stDmacPublicInfo → dMACCfgCommonPara → u8MacActiveFlag → offset 26080
q_dMACUserTable→stDmacPublicInfo→stCaCfgPara→ucSCellIndex→offset 1184
q_dMACUserTable → stDmacPublicInfo - dMACCfgCommonPara → u8CellId → offset 26112
q_dMACUserTable → stDmacPerformanceUsrInfo → dMACMeasAllowInfo → ulDlUserTpRbNum→offset 214464
q_dMACUserTable → stDmacDlschUsrInfo → DIFluxInnerPara → ulAmbrSumBytes → offset 165408
q_dMACUserTable → stDmacPublicInfo → dMACCfgCommonPara → ucActiveDrbNum -offset 26328
q_dMACUserTable → stDmacDlschUsrInfo → DIFluxInnerPara → adMacRlcFluxInner → ulSendDataBytes→offset 165440
q_dMACUserTable → stDmacDlschUsrInfo → stDlschUsrInfo → astDMACRlcInfo → stMacRlcMeasureStru→ulTPWinByteNum→offset 134368

The foregoing structure member variables are scattered at different locations in the memory 130. When data is called by using a function, data is stored in the memory 130 relatively discretely, and different functions access different structure member variables. When data associated with the foregoing structure member variables is prefetched according to the prior art, a prefetch instruction needs to be inserted into each function and therefore a plurality of structure member variables require a plurality of prefetch instructions. In addition, a data prefetching time of each structure member variable is specified by the program developer, and it cannot be ensured that a compilation and scheduling time of the compiler 210 matches the time specified by the program developer. When the CPU needs to access data in the cache 120, the data may not have been prefetched into the cache 120; or the data is prefetched into the cache 120 excessively early and the data is replaced before being accessed by the CPU, and consequently the hit rate of the cache 120 is reduced. In this embodiment of this application, data used by a function is prefetched into the cache 120 when the function starts to be executed, or data of the structure member variables is prefetched into the cache 120 before the data is used. In addition, the compiler 210 may parse out a sequence of the structure member variables, and the data is prefetched into the cache 120 in descending order of the structure member variables, so as to further improve the data prefetching efficiency and improve the hit rate of the cache 120.

In an optional embodiment, the obtaining N functions and a first global variable of the N functions includes:
receiving, by the compiler 210 in the compilation process, compilation indication information, and obtaining the N functions and the first global variable of the N functions according to the compilation indication information, where the compilation indication information is used to indicate the N functions and the first global variable of the N functions, and/or the compilation indication information is used to indicate the N functions and a global variable that is not used in the N functions.

Specifically, the N functions and the first global variable of N functions are indicated by setting the compilation indication information. For example, the compilation indication information may be prepared before a function header of a function that is in the N functions and that is before a program. The compilation indication information indicates the N functions and the first global variable of the N functions. In this way, the N functions and the first global variable of the N functions may be indicated by using only one piece of compilation indication information. Specifically, the compilation indication information may be a keyword attribute attribute smar_prefetch_var.

Certainly, the compilation indication information may also be used to indicate the N functions and the global variable that is not used in the N functions. In this way, when parsing a global variable of the N functions, the compiler 210 does not parse the global variable that is not used in the N functions, so that resource overheads for parsing can be reduced. The compilation indication information may alternatively indicate a global variable used in the N functions and the global variable that is not used in the N functions.

Optionally, the compilation indication information may be inserted before a function header in a form of a command line.

Optionally, the compilation indication information may not only indicate at least one global variable, but also indicate a structure member variable included in each of the at least one global variable. That is, a global variable that requires special focus is identified by using the compilation indication information. The compiler 210 may parse a structure member variable indicated by the compilation indication information.

For example, the following program may be used as prefetching compilation indication information before the function header. For example, the compilation indication information may be a keyword, and a global variable is specified by using the keyword.
_attribute_((smart_prefetch_var("qx_aDLSynUsrLink")))
_attribute_((smart_prefetch_var("q_dMACUserTable")))
Void MUX_RefreshRlcSharePam(UINT32 ulCellId)

In an optional embodiment, the obtaining N functions and a first global variable of the N functions includes: reading, by the compiler 210 in the compilation process, a first correspondence and/or a second correspondence from a text file, and obtaining the N functions and the first global variable of the N functions according to the first correspondence and/or the second correspondence, where the first correspondence is used to indicate the N functions and the first global variable of the N functions, and/or the second correspondence is used to indicate the N functions and a global variable that is not used in the N functions.

In this embodiment of this application, a plurality of functions and a global variable of the plurality of functions that needs to be analyzed may be stored in the text file in a form of a list. There may be a correspondence between a function and a global variable that needs to be analyzed or a global variable that does not need to be analyzed. The first global variable of the N functions that needs to be analyzed is represented by using the first correspondence, and a variable of the N functions that does not need to be analyzed is represented by using the second correspondence. When parsing the N functions, the compiler 210 searches the list in the text file for the first global variable of the N functions according to the first correspondence and/or the second correspondence. Certainly, the compiler may parse, in advance, start addresses in the list that are of the plurality of functions and a start address of the global variable corresponding to the plurality of functions. During execution of the N functions, the start addresses parsed out in advance are searched for the start address of the N functions. When the first global variable includes M structure member variables, and only some of the M structure member variables are used in the N functions, a correspondence between the some structure member variables and the N functions may also be stored in the text file, so that the compiler 210 obtains the correspondence. In this way, the compiler does not need to parse the at least one structure member variable used in the N functions, but directly searches the at least one structure member variable according to the correspondence in the text file. In this way, centralized management can be implemented, and operation complexity can be reduced.

Specifically, the first correspondence may be a list including a global variable used in a function. For example, a global variable a is used in a first function, and the global variable a is used in a second function. The variable used in the first function and the second function is stored in a form of a list. The prefetch engine needs to prefetch, into the cache, data that is in the memory and that is associated with the global variable a used in the first function and the second function, for example, a may be the first global variable. The compiler finds the first function, the second function, and the global variable a of the two functions by searching the list. Similarly, the second correspondence may be a list including a global variable that is not used in a function. In this way, the centralized management can be implemented, and the operation complexity can be reduced.

In an optional embodiment, the obtaining a first global variable of the N functions includes: parsing a partition of the N functions, where the partition includes a hot partition and a cold partition; and obtaining the first global variable from the hot partition.

Specifically, the compiler 210 can parse out the cold partition and the hot partition of the N functions during compilation. When parsing out the cold partition of the N functions, the compiler 210 may screen out global variable information accessed by a cold partition that is not executed. In this way, data corresponding to a global variable in the hot partition may be prefetched, and data corresponding to a global variable in the cold partition is prevented from being prefetched into the cache 120. Therefore, unnecessary prefetching can be avoided, and the prefetching efficiency can be improved.

Further, the hot partition is used to indicate that the partition of the N functions is frequently accessed, and the cold partition is used to indicate that the partition of the N functions is accessed for a relatively small quantity of times. For example, in a specific time period, when a quantity of times for which a first partition of the N functions is accessed exceeds a preset threshold, it is considered that the first partition is a hot partition. In a specific time period, when a quantity of times for which a second partition of the N functions is accessed is less than a preset threshold, it is considered that the second partition is a cold partition.

In an optional embodiment, after the obtaining a first global variable of the N functions, the method 300 further includes: The compiler 210 performs the following operations in the compilation process: obtaining a second global variable of the N functions; and determining an access sequence of the first global variable and the second global variable. S330 includes: The prefetch engine 230 prefetches, into the cache 120 according to the access sequence, the data that is in the memory 130 and that is associated with the first global variable.

Specifically, the compiler 210 may not only parse out the first global variable and the second global variable of the N functions, but also parse out the sequence of the first global variable and the second global variable in the program running process with reference to a compilation control information flow. The prefetch engine 230 may prefetch the data associated with the first global variable into the cache 120 according to the sequence. Data first stored into the cache 120 is first accessed by the CPU. For example, when the compiler 210 learns, through parsing, that the first global variable is before the second global variable, the prefetch engine 230 first prefetches the data that is in the memory 130 and that is corresponding to the first global variable. When the compiler 210 learns, through parsing, that the second global variable is before the first global variable, the prefetch engine 230 first prefetches data that is in the memory 130 and that is corresponding to the second global variable, and then prefetches the data corresponding to the first global variable. In this way, a prefetching sequence of the prefetch engine 230 is a program execution sequence, so as to avoid occupation of unnecessary storage space caused by excessively early prefetching of unnecessary data into the cache 120, and avoid a case in which data to be subsequently executed is prefetched excessively early and the data is excessively replaced before being read by the CPU. Therefore, the hit rate of the cache 120 is further improved, and system performance is improved.

Optionally, when the first global variable includes M structure member variables, and at least one of the M structure member variables is used in the N functions, the compiler 210 may parse an execution ranking of each of the at least one structure member variable with reference to the compilation control information flow. The prefetch engine 230 prefetches, according to the execution ranking of each structure member variable, data that is in the memory 130 and that is corresponding to the structure member variable.

Optionally, the first global variable and the second global variable are called in the N functions. If the first global variable includes M structure member variables, and the second global variable includes Q structure member variables, the compiler 210 may parse L structure member variables used in the N functions, and the L structure member variables include some of the M structure member variables and some of the Q structure member variables. In this way, the compiler 210 may parse out an offset of each of the L structure member variables relative to the start address of the first global variable or an offset of each of the L structure member variables relative to a start address of the second global variable. The compiler 210 may also parse a calling sequence of the L structure member variables, and store the calling sequence of the L structure member variables in the text file or the binary file 220, so that the prefetch engine 230 prefetches data associated with the L structure member variables into the cache 120. Q is an integer greater than or equal to 1, and L is an integer greater than or equal to 1 and is less than or equal to M+Q. That is, the at least one structure member variable used in the N functions is from one global variable or from different global variables. This is not limited in this embodiment of this application.

In an optional embodiment, S330 includes: When reading the start address of the N functions that is in the text file or the binary file 220, prefetching, by the prefetch engine 230 into the cache 120, data that is in the memory 130 and that is associated with first global variable at the start address of the first global variable; or
before a first time period in which the start address of the N functions that is in the text file or the binary file 220 is read, prefetching, into the cache 120, data that is in the memory 130 and that is associated with the first global variable at the start address of the first global variable; or
after a second time period in which the start address of the N functions that is in the text file or the binary file 220 is read, prefetching, into the cache 120, data that is in the memory 130 and that is associated with the first global variable at the start address of the first global variable.

In an optional embodiment, the prefetch engine 230 may execute a prefetch instruction. For example, the compiler 210 may determine a prefetching address in a code generation process, and output the prefetching address to the text file or the binary file 220. When reading the prefetching address, the prefetch engine 230 prefetches data that is in the memory 130 and that is corresponding to the prefetching address. In this way, the compiler 210 notifies the prefetch engine 230 of the prefetching address, and the prefetch engine 230 can precisely prefetch the data in the memory 130 according to the prefetching address. The compiler 210 and the prefetch engine 230 perform execution in parallel, and data is prefetched by using software in coordination with hardware. In this way, running complexity of the compiler 210 can be reduced, the data prefetching efficiency can be improved, and the hit rate of the cache 120 can be further improved.

In an optional embodiment, this embodiment of this application may be applied to a multi-core computer system. If a data prefetching method in the prior art is used, a software instruction indicates that the user needs to notify, in the data prefetching process, a core number corresponding to each of a plurality of cores in the memory 130, and then data that is in the memory 130 and that is corresponding to the core number is prefetched. In this embodiment of this application, in a plurality of computer systems, each core may have a prefetch engine 230, and the prefetch engine 230 of each core may obtain a core number of the core. That is, the user does not need to notify a specific core number in the data prefetching process, and the prefetch engine 230 may obtain data at a corresponding location in the memory 130.

It should be understood that the cache 120 mentioned in this embodiment of this application may be a level 1 cache, a level 2 cache, a level 3 cache, or the like, or may be at least one of a level 1 cache, a level 2 cache, or a level 3 cache. This is not limited in this embodiment of this application.

In an optional embodiment, the following shows a data prefetching method according to this embodiment of this application, and the method includes the following steps.

Sep 1: The compiler 210 obtains P functions and at least one global variable of each of the P functions.

Optionally, the P functions and the at least one global variable of each of the P functions may be obtained by using compilation indication information, or the P functions and the at least one global variable of each of the P functions may be obtained according to a preset correspondence (for example, the foregoing first correspondence and/or second correspondence in the text file) between the at least one global variable of each of the P functions and the P functions.

Sep 2: The compiler 210 parses each of the P functions, to obtain a start address of each function.

Sep 3: The compiler 210 parses a start address of the at least one global variable of each function (if the at least one global variable is a global structure member variable, the compiler 210 parses an address offset of the global structure member variable relative to the global variable).

Optionally, a sequence of sep 2 and sep 3 is not limited. Sep 2 may be before sep 3, or sep 3 may be before sep 2. This is not limited in this embodiment of this application.

Sep 4: When analyzing specified N functions, the compiler 210 searches the P functions for the N functions, and determines a start address of the N functions from the start address obtained in Step 2.

Certainly, step 1 to step 3 may be not required. When analyzing the N functions, the compiler may directly parse out the start address of the N functions.

Sep 5: The compiler 210 parses a partition of the N functions, screens out a cold partition, and retains a hot partition, and the compiler 210 parses a first global variable and a second global variable used in the N functions, and parses the first global variable and the second global variable in the hot partition (if the first global variable and the second global variable are global structure member variables, the compiler 210 parses a first structure member variable and a second structure member variable used in the N functions).

Sep 6: The compiler 210 determines a calling sequence of the first global variable and the second global variable with reference to compilation control flow information (if the first global variable and the second global variable are global structure member variables, the compiler 210 determines an access sequence of the first structure member variable and the second structure member variable).

Sep 7: Obtain a start address of the first global variable and a start address of the second global variable from the start address that is of the at least one global variable and that is obtained in step 3 (if the first global variable and the second global variable are global structure member variables, an address offset of the first structure member variable relative to the global variable and an address offset of the second structure member variable relative to the global variable are obtained, or a cache line index number of the first structure member variable in the memory 130 and a cache line index number of the second structure member variable in the memory 130 are obtained).

Certainly, step 1 to step 3 may be not required. When analyzing the N functions, the compiler may obtain the start address by directly parsing the start address of the first global variable and the start address of the second global variable.

Sep 8: The compiler 210 stores, in a file or a binary file, the start address of the N functions, the start address of the first global variable, the start address of the second global variable, and the access sequence of the first global variable and the second global variable (if the first global variable includes a structure member variable, the compiler 210 stores, in the text or the binary file, the start address of the N functions, the start address of the first global variable, the calling sequence of the first structure member variable and the second structure member variable, the address offset of the first structure member variable relative to the global variable, and the address offset of the second structure member variable relative to the global variable).

Sep 9: The prefetch engine 230 prefetches data in the memory 130 into the cache 120 according to information stored in the text or the binary file.

In this way, the compiler 210 may determine, according to the preset compilation indication information or correspondence, the P functions and the at least one global variable corresponding to each of the P functions. If the at least one global variable is a global structure member variable, a structure member variable of each global structure member variable is determined. In addition, the compiler 210 parses the start address of each of the P functions, a start address of a global variable corresponding to each function, or an address offset of each structure member variable, to form a mapping table. When parsing the specific N functions, the compiler 210 first parses the partition of the N functions, screens out the cold partition, parses, in the hot partition, a global variable or a global structure member variable used in the N functions, matches the N functions in the matching table to obtain the start address of the N functions, and matches the first global variable used in the N functions, to obtain the start address of the first global variable, or matches a structure member variable used in the N functions, to obtain an address offset of the structure member variable. Then, the compiler 210 parses out a sequence of global variables used in the N functions, or parses out a sequence of structure member variables used in the N functions. The compiler 210 stores start address information and sequence information in the text or the binary file, so that the prefetch engine 230 prefetches data into the cache 120.

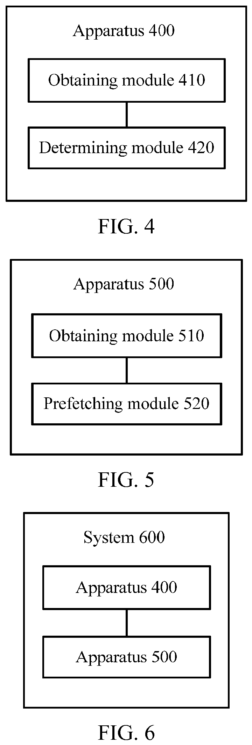

The data prefetching method provided in the embodiments of this application is described with reference to FIG. 3. A data prefetching apparatus and system provided in the embodiments of this application are described below with reference to FIG. 4 to FIG. 6.

FIG. 4 shows a data prefetching apparatus 400 according to an embodiment of this application. For example, the apparatus 400 may be a compiler 210. A computer system includes the apparatus 400, a prefetch engine 230, and a memory 130. The apparatus 400 includes:
an obtaining module 410, configured to obtain N functions and a first global variable of the N functions, where N is an integer greater than or equal to 1; and
a determining module 420, configured to determine a start address of the N functions and a start address of the first global variable, so that the prefetch engine can prefetch, into a cache 120 according to the start address of the N functions and the start address of the first global variable, data that is in the memory and that is associated with the first global variable.

In an optional embodiment, the first global variable includes M structure member variables, and M is greater than or equal to 1.

In an optional embodiment, the determining module 420 is specifically configured to: parse at least one structure member variable used in the N functions, where the M structure member variables include the at least one structure member variable; and determine an address offset of each of the at least one structure member variable relative to the start address of the first global variable, so that the prefetch engine 230 can prefetch, into the cache 120 according to the start address of the N functions, the start address of the first global variable, and the address offset of each of the at least one structure member variable, data that is in the memory 130 and that is associated with the at least one structure member variable.

In an optional embodiment, the determining module 420 is further specifically configured to: parse at least one structure member variable used in the N functions, where the M structure member variables include the at least one structure member variable; determine an address offset of each of the at least one structure member variable relative to the start address of the first global variable; and determine, according to the address offset of each of the at least one structure member variable, a cache line index number of each of the at least one structure member variable in the memory 130, so that the prefetch engine 230 can prefetch, into the cache 120 according to the start address of the N functions, the start address of the first global variable, and the cache line index number of each structure member variable in the memory 130, data that is in the memory 130 and that is associated with the at least one structure member variable.

In an optional embodiment, the apparatus 400 further includes: a parsing module, configured to: before the address offset of each of the at least one structure member variable relative to the start address of the first global variable is determined, parse the M structure member variables, to obtain an address offset of each of the M structure member variables relative to the start address of the first global variable. The determining module 420 is further specifically configured to: determine the address offset of each of the at least one structure member variable relative to the start address of the first global variable from the address offset of each of the M structure member variables relative to the start address of the first global variable.

In an optional embodiment, the obtaining module 410 is further configured to: obtain P functions and at least one global variable of each of the P functions before obtaining the N functions and the first global variable of the N functions, where the P functions include the N functions, P is greater than or equal to 1, and P is greater than or equal to N. The parsing module is further configured to: parse a start address of each of the P functions, and parse a start address of each of the at least one global variable of each of the P functions. The obtaining module 410 is specifically configured to: determine the N functions from the P functions, and determine the first global variable from at least one global variable of the N functions. The determining module 420 is further specifically configured to: determine the start address of the N functions from the start address of each of the P functions, and determine the start address of the first global variable from the start address of each global variable.

In an optional embodiment, the obtaining module 410 is specifically configured to: in a compilation process of the apparatus 400, receive compilation indication information, and obtain the N functions and the first global variable of the N functions according to the compilation indication information, where the compilation indication information is used to indicate the N functions and the first global variable of the N functions, and/or the compilation indication information is used to indicate the N functions and a global variable that is not used in the N functions.

In an optional embodiment, the obtaining module 410 is further specifically configured to: in a compilation process of the apparatus 400, read a first correspondence and/or a second correspondence from a text file, and obtain the N functions and the first global variable of the N functions according to the first correspondence and/or the second correspondence, where the first correspondence is used to indicate the N functions and the first global variable of the N functions, and/or the second correspondence is used to indicate the N functions and a global variable that is not used in the N functions.

In an optional embodiment, the apparatus 400 further includes: an output module, configured to: after the start address of the first global variable are determined, output the start address of the N functions and the start address of the first global variable to the text file or a binary file 220, so that the prefetch engine 230 reads the start address of the N functions and the start address of the first global variable that are in the text file or the binary file, and prefetches, into the cache 120 according to the start address of the N functions and the start address of the first global variable that are read, the data that is in the memory 130 and that is associated with the first global variable.

In an optional embodiment, the obtaining module 410 is specifically configured to: parse a partition of the N functions, where the partition includes a hot partition and a cold partition; and obtain the first global variable from the hot partition.

In an optional embodiment, the obtaining module 410 is further configured to: obtain a second global variable of the N functions. The determining module 420 is further configured to determine an access sequence of the first global variable and the second global variable, so that the prefetch engine 230 can prefetch, into the cache 120 according to the access sequence, the data that is in the memory 130 and that is associated with the first global variable.

In an optional embodiment, the obtaining module 410 is further configured to: obtain a third global variable of the N functions. The determining module 420 is further configured to determine a cache line index number of the first global variable in the memory 130 and a cache line index number of the third global variable in the memory 130, so that the prefetch engine 230 can prefetch, into the cache 120 according to the cache line index numbers, the data that is in the memory 130 and that is associated with the first global variable.

In an optional embodiment, the N functions are hotspot functions, and the first global variable is a hotspot global variable.

It should be understood that the apparatus 400 herein is implemented in a form of a functional module. The term "module" herein may be an ASIC, an electronic circuit, a processor (for example, a shared processor, a dedicated processor, or a group processor) configured to execute one or more software or firmware programs, a storage, or a combination logic circuit and/or another proper component that supports the described functions. In an optional example, a person skilled in the art may understand that, the apparatus 400 may be specifically the compiler 210 in the foregoing embodiment, and the apparatus 400 may be configured to execute procedures and/or steps that are corresponding to the compiler 210 in the foregoing method embodiment. To avoid repetition, details are not described herein again.

FIG. 5 shows a data prefetching apparatus 500 according to an embodiment of this application. For example, the apparatus 500 may be a prefetch engine 230. The apparatus 500 includes:
an obtaining module 510, configured to obtain a start address of N functions and a start address of a first global variable of the N functions, where N is an integer greater than or equal to 1; and
a prefetching module 520, configured to prefetch, into a cache according to the start address of the N functions and the start address of the first global variable of the N functions, data that is in a memory and that is associated with the first global variable.

In an optional embodiment, the obtaining module 510 is specifically configured to read the start address of the N functions and the start address of the first global variable that are input by a compiler into the text file or the binary file. The prefetching module 520 is specifically configured to prefetch, into the cache according to the start address of the N functions and the start address of the first global variable that are read, the data that is in the memory and that is associated with the first global variable.

In an optional embodiment, the prefetching module 510 is further specifically configured to: when the start address of the N functions that is in the text file or the binary file is read, prefetch, into the cache, the data that is in the memory and that is associated with the first global variable at the start address of the first global variable; or before a first time period in which the start address of the N functions that is in the text file or the binary file is read, prefetch, into the cache, the data that is in the memory and that is associated with the first global variable at the start address of the first global variable; or after a second time period in which the start address of the N functions that is in the text file or the binary file is read, prefetch, into the cache, the data that is in the memory and that is associated with the first global variable at the start address of the first global variable.

FIG. 6 shows a data prefetching system 600 according to an embodiment of this application. The system 600 includes the apparatus 400 and the apparatus 500. The apparatus 500 is configured to prefetch, into the cache 120 according to the start address of the N functions and the start address of the first global variable, the data that is in the memory 130 and that is associated with the first global variable.

In an optional embodiment, the apparatus 500 is specifically configured to: when the start address of the N functions that is in the text file or the binary file 220 is read, prefetch, into the cache 120, data that is in the memory 130 and that is associated with the first global variable at the start address of the first global variable; or
before a first time period in which the start address of the N functions that is in the text file or the binary file 220 is read, prefetch, into the cache 120, data that is in the memory 130 and that is associated with the first global variable at the start address of the first global variable; or
after a second time period in which the start address of the N functions that is in the text file or the binary file 220 is read, prefetch, into the cache 120, data that is in the memory 130 and that is associated with the first global variable at the start address of the first global variable.

Therefore, the apparatus 400 determines the start address of the N functions and the start address of the first global variable, and the apparatus 400 outputs the start address of the N functions and the start address of the first global variable to the text file or the binary file 220. The apparatus 500 reads the start address of the N functions and the start address of the first global variable that are in the text file or the binary file 220. The apparatus 400 and the apparatus 500 may coordinate with each other to determine a data prefetching time according to the start address of the N functions. For example, the data is prefetched in the first time period before the apparatus 500 reads the start address of the N functions, or when the apparatus 500 reads the start address of the N functions, or in the second time period after the apparatus 500 reads the start address of the N functions. For example, the first time period is three cycles, and the second time period is four cycles. An event that data is prefetched in three cycles before the start address of the N functions is identified by using first identification information, an event that data is prefetched in four cycles after the start address of the N functions is identified by using second identification information, and an event that data is prefetched when the start address of the N functions is read is identified by using third identification information. One of the three pieces of identification information is stored in the text file or the binary file 220. The apparatus 500 determines the data prefetching time according to the identification information, so that data prefetching flexibility can be further improved.

In an optional embodiment, the apparatus 500 is further specifically configured to prefetch, into the cache 120 according to the start address of the N functions, the start address of the first global variable, and the address offset of each of the at least one structure member variable, the data that is in the memory 130 and that is associated with the at least one structure member variable.

In an optional embodiment, the apparatus 500 is further specifically configured to prefetch the data in the memory 130 according to the start address of the N functions, the start address of the first global variable, and the cache line index number of each structure member variable in the memory 130.

In an optional embodiment, the apparatus 500 is further specifically configured to: read the start address of the N functions and the start address of the first global variable that are in the text file or the binary file, and prefetch, into the cache 120 according to the start address of the N functions and the start address of the first global variable that are read, the data that is in the memory 130 and that is associated with the first global variable.

In an optional embodiment, the apparatus 500 is further specifically configured to prefetch, into the cache 120 according to the access sequence numbers, data that is in the memory 130 and that is associated with a global variable with a higher access ranking.

The apparatus 400 may also output, to the binary file or the text file, the start address of the N functions, the start address of the first global variable, and a cache line index number that is in the memory 130 and that is of data corresponding to a plurality of global variables used in the N functions. The apparatus 500 prefetches, into the cache 120 according to the start address of the N functions, the start address of the first global variable, and the cache line index number of the global variables in the memory 130, the data that is in the memory 130 and that is associated with the plurality of global variables. The apparatus 400 may alternatively parse an access sequence of the plurality of global variables, and outputs the start address of the N functions, the start address of the first global variable, and information about the access sequence of the plurality of global variables to the text file or the binary file 220. The apparatus 500 prefetches data in the memory into the cache 120 according to the start address of the N functions, the start address of the first global variable, and the access sequence of the plurality of global variables.

When the first global variable is a structural member variable, the apparatus 400 may output the start address of the N functions, the start address of the first full office variable, and an address offset of a structure member variable used in the N functions to the text file or the binary file 220, and the prefetch engine 230 prefetches the data in the memory 130 into the cache 120 according to the start address of the N functions, the start address of the first global variable, and the address offset of the structure member variable in the text file or the binary file 220. The apparatus 400 may alternatively output, to the text file or the binary file 220, the start address of the N functions, the start address of the first global variable, and a cache line index number that is in the memory 130 and that is of a structure member variable used in the N functions. The apparatus 500 prefetches the data in the memory 130 into the cache 120 according to the start address of the N functions, the start address of the first global variable, and the cache line index number in the text file or the binary file 220. The apparatus 400 may alternatively parse an access sequence of a plurality of structure member variables, and output information about the access sequence of the plurality of structure member variables, the start address of the N functions, and the start address of the first global variable to the text file or the binary file 220. The prefetch engine 230 prefetches, into the cache 120 according to the access sequence of the plurality of structure member variables, the start address of the N functions, and the start address of the first global variable, data that is in the memory 130 and that is associated with the plurality of structure member variables.

It should be understood that the text file or the binary file 220 may also store the information about the access sequence of the plurality of global variables, the access sequence of the plurality of structure member variables, the cache line index number of the plurality of global variables, the cache line index number of the plurality of structure member variables, at least one of address offsets of the plurality of structure member variables, the start address of the N functions, and the start address of the first global variable. The apparatus 500 prefetches the data in the memory 130 into the cache 120 according to the information. Alternatively, the text file or the binary file 220 may store a correspondence between a function and a start address. For example, one start address is used in one function, or one start address is used in a plurality of functions. This is not limited in this embodiment of this application.

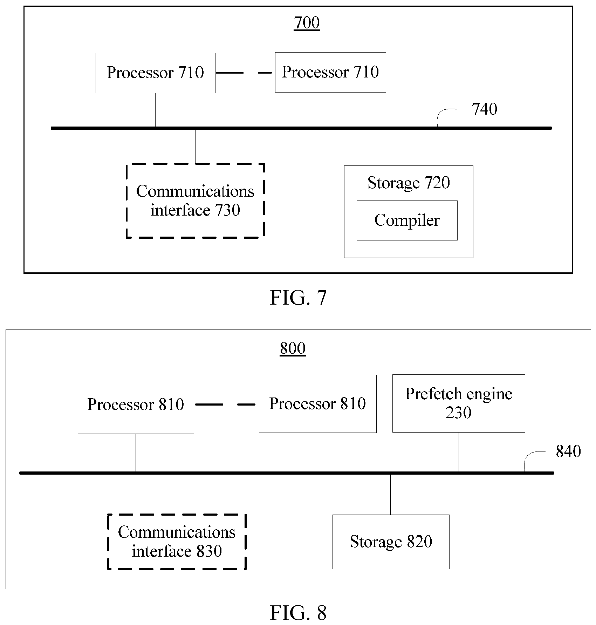

FIG. 7 shows a data prefetching apparatus 700 according to an embodiment of this application. For example, the apparatus 700 may be a computer. The computer may be configured to implement a function of the compiler in the foregoing embodiments.

Specifically, the apparatus 700 includes a processor 710 and a storage 720. Optionally, the apparatus 700 further includes a communications interface 730. The processor 710, the storage 720, and the communications interface 730 are connected by using a bus 740. The storage 720 includes a memory 130, an external storage, and the like. There may be one or more processors 710, and each processor 710 includes one or more processor cores.

A bus connection manner is merely an example, and a device such as the processor and the storage may also be connected in another connection manner. For example, the processor is a center, and another device such as the storage is connected to the processor.

The storage 720 is configured to store a computer executable instruction, and the processor 710 is configured to: read the computer readable instruction, and implement the method provided in the foregoing embodiments of this application. Specifically, the processor 710 is configured to: obtain N functions and a first global variable of the N functions, where N is an integer greater than or equal to 1; and determine a start address of the N functions and a start address of the first global variable, so that a prefetch engine can prefetch, into a cache according to the start address of the N functions and the start address of the first global variable, data that is in a memory and that is associated with the first global variable. N is an integer greater than or equal to 1. It should be noted that the cache herein may be integrated with the processor 710, or may be independently disposed.

For more specific method implementation, refer to the foregoing method embodiment. Details are not described herein again. It should be noted that a specific data prefetching method of the prefetch engine is not limited in this embodiment of this application.

FIG. 8 shows a data prefetching apparatus 800 according to an embodiment of this application. The apparatus 800 may be a computer. The apparatus 800 includes at least one processor 810, a storage 820, and a prefetch engine 230. Optionally, the apparatus 800 further includes a communications interface 830. The at least one processor 810, the storage 820, the prefetch engine 230, and the communications interface 830 are connected by using a bus 840.

A bus connection manner is merely an example, and a device such as the processor and the storage may also be connected in another connection manner. For example, the processor is a center, and another device such as the storage is connected to the processor.

The storage 820 is configured to store a computer executable instruction, for example, the compiler in the foregoing embodiments. The processor 810 reads the computer executable instruction stored in the storage 820, to determine a start address of N functions and a start address of a first global variable of the N functions, and then instructs the prefetch engine 230 to obtain the start address of the N functions and the start address of the first global variable of the N functions. The prefetch engine 230 prefetches, into a cache according to the start address of the functions and the start address of the first global variable of the N functions, data that is in the memory and that is associated with the first global variable. N is an integer greater than or equal to 1.

For more specific implementation of the prefetch engine 230, refer to the foregoing method embodiment. Details are not described herein again. It should be noted that a method of obtaining, by the compiler or another program or a hardware module, the start address of the N functions and the start address of the first global variable is not limited in this embodiment of this application.

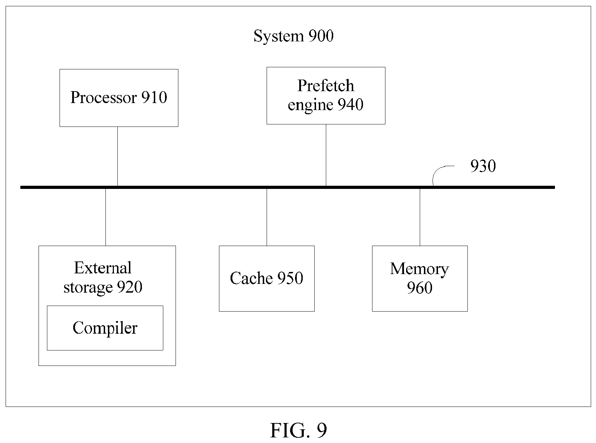

FIG. 9 shows a data prefetching computer system 900 according to an embodiment of this application. The system 900 includes a processor 910, an external storage 920, a prefetch engine 940, a cache 950, a memory 960, and a bus 930. For example, the processor 910, the prefetch engine 940, the external storage 920, the cache 950, and the memory 960 are connected by using the bus 930. The external storage 920 stores a software program of a compiler. The processor 910 reads the software program into the memory 960, to implement the method implemented by the compiler described in the foregoing embodiments.

Specifically, the compiler obtains N functions and a first global variable of the N functions, and N is an integer greater than or equal to 1. The compiler determines a start address of the N functions and a start address of the first global variable. The prefetch engine obtains the start address of the N functions and the start address of the first global variable that are determined by the compiler, and prefetches, into the cache according to the start address of the N functions and the start address of the first global variable, data that is in the memory and that is associated with the first global variable. A person skilled in the art should understand that when the compiler is implemented as software, an action performed by the compiler is actually performed by the processor 910.

A bus connection manner is merely an example, and a device such as the processor and the storage may also be connected in another connection manner. For example, the processor is a center, and another device such as the storage is connected to the processor.

In some other implementations, the external storage 920 and the memory 960 may be collectively referred to as a storage, and the storage may also include the cache 950. In addition to the manner shown in FIG. 9, the cache 950 may also be integrated into the processor 910.

For another specific implementation, refer to the foregoing embodiments. Details are not described herein again.

Therefore, in this embodiment of this application, the compiler analyzes prefetching information of a function, the prefetch engine prefetches data in the memory according to the prefetching information. The compiler and the prefetch engine may perform execution in parallel, so as to further improve data prefetching efficiency. In addition, a data prefetching time is the prefetching information parsed out by the compiler 210. In this way, the prefetching time does not depend on a software prefetch instruction in the prior art, and prefetching flexibility is improved.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data prefetching method, comprising:
obtaining (310), by a compiler, N functions and one or more global variables of the N functions, wherein N is an integer greater than or equal to 1, the N functions relating to a specific service; and
determining (320), by the compiler, a start address of one of the N functions and a start address of the one or more global variables of the N functions, so that, when a prefetch engine (230) reads the start address of one of the N functions, the prefetch engine (230) prefetches (330) into a cache, according to the start address of one of the N functions and the start address of the one or more global variables, data that is in a memory and that is associated with the one or more global variables, wherein there is an address mapping relationship between the start address of the one or more global variables and a start address of the data.

2. The method according to claim 1, wherein the one or more global variables comprise M structure member variables, and M is an integer greater than or equal to 1.

3. The method according to claim 2, wherein the determining a start address of one of the N functions and a start address of the one or more global variables, so that a prefetch engine prefetch into a cache, according to the start address of one of the N functions and the start address of the one or more global variables, data that is in a memory and that is associated with the one or more global variables comprises:
parsing at least one structure member variable used in the N functions, wherein the M structure member variables comprise the at least one structure member variable; and
determining an address offset of each of the at least one structure member variable relative to the start address of the one or more global variables, so that the prefetch engine prefetches into the cache, according to the start address of one of the N functions, the start address of the one or more global variables, and the address offset of each of the at least one structure member variable, data that is in the memory and that is associated with the at least one structure member variable.

4. The method according to claim 2, wherein the determining a start address of one of the N functions and a start address of the one or more global variables, so that a prefetch engine prefetch into a cache, according to the start address of one of the N functions and the start address of the one or more global variables, data that is in a memory and that is associated with the one or more global variables comprises:
parsing at least one structure member variable used in the N functions, wherein the M structure member variables comprise the at least one structure member variable;
determining an address offset of each of the at least one structure member variable relative to the start address of the one or more global variables; and
determining, according to the address offset of each of the at least one structure member variable, a cache line index number of each of the at least one structure member variable in the memory, so that the prefetch engine prefetch into the cache, according to the start address of one of the N functions, the start address of the one or more global variables, and the cache line index number of each structure member variable in the memory, data that is in the memory and that is associated with the at least one structure member variable.

5. The method according to claim 3 or 4, wherein, before the determining an address offset of each of the at least one structure member variable relative to the start address of the one or more global variables, the method further comprises parsing the M structure member variables, to obtain an address offset of each of the M structure member variables relative to the start address of the one or more global variables, and
wherein the determining an address offset of each of the at least one structure member variable relative to the start address of the one or more global variables comprises determining the address offset of each of the at least one structure member variable relative to the start address of the one or more global variables from the address offset of each of the M structure member variables relative to the start address of the one or more global variables.

6. The method according to any one of claims 1 to 5, wherein the obtaining N functions and one or more global variables of the N functions comprises:
receiving compilation indication information, and obtaining the N functions and the one or more global variables of the N functions according to the compilation indication information, wherein the compilation indication information is used to indicate the N functions and the one or more global variables of the N functions.

7. The method according to any one of claims 1 to 5, wherein the obtaining N functions and one or more global variables of the N functions comprises:
reading a first correspondence from a text file, and obtaining the N functions and the one or more global variables of the N functions according to the first correspondence, wherein the first correspondence is used to indicate the N functions and the one or more global variables of the N functions.

8. The method according to any one of claims 1 to 7, wherein, after the determining a start address of one of the N functions and a start address of the one or more global variables, the method further comprises:
outputting the start address of one of the N functions and the start address of the one or more global variables to a text file or a binary file, so that the prefetch engine read the start address of one of the N functions and the start address of the one or more global variables that are in the text file or the binary file, and prefetch into the cache, according to the start address of the N functions and the start address of the one or more global variables that are read, the data that is in the memory and that is associated with the one or more global variables.

9. The method according to any one of claims 1 to 8, wherein the obtaining one or more global variables of the N functions comprises:
parsing a partition of the N functions, wherein the partition comprises a hot partition and a cold partition; and
obtaining the one or more global variables from the hot partition.

10. The method according to any one of claims 1 to 9, wherein the N functions are hotspot functions, and the one or more global variables are a hotspot global variable.

11. A data prefetching method, comprising:
obtaining, by a prefetch engine, a start address of one of N functions and a start address of one or more global variables of the N functions, wherein the start addresses are determined by a compiler, and N is an integer greater than or equal to 1, the N functions relating to a specific service; and
when reading the start address of one of the N functions, prefetching into a cache, by the prefetch engine, according to the start address of the one of the N functions and the start address of the one or more global variables of the N functions, data that is in a memory and that is associated with the one or more global variables, wherein there is an address mapping relationship between the start address of the one or more global variables and a start address of the data.

12. The method according to claim 11, wherein the obtaining a start address of one of N functions and a start address of one or more global variables of the N functions comprises reading the start address of one of the N functions and the start address of the one or more global variables that are input by the compiler into a text file or a binary file, and
wherein the prefetching into a cache, according to the start address of one of the N functions and the start address of the one or more global variables of the N functions, data that is in a memory and that is associated with the one or more global variables comprises prefetching into the cache, according to the start address of one of the N functions and the start address of the one or more global variables that are read, the data that is in the memory and that is associated with the one or more global variables.

13. The method according to claim 12, wherein the prefetching into the cache, according to the start address of one of the N functions and the start address of the one or more global variables that are read, the data that is in the memory and that is associated with the one or more global variables comprises:
when the start address of one of the N functions that is in the text file or the binary file is read, prefetching into the cache, the data that is in the memory and that is associated with the one or more global variables at the start address of the one or more global variables; or
before a time period in which the start address of one of the N functions that is in the text file or the binary file is read, prefetching into the cache, the data that is in the memory and that is associated with the one or more global variables at the start address of the one or more global variables; or
after a second time period, in which the start address of one of the N functions that is in the text file or the binary file is read, prefetching into the cache, the data that is in the memory and that is associated with the one or more global variables at the start address of the one or more global variables.

14. A data prefetching apparatus (400), comprising:
an obtaining module (410), configured to obtain N functions and one or more global variables of the N functions, wherein N is an integer greater than or equal to 1, the N functions relating to a specific service;
a prefetch engine; and
a determining module (420), configured to determine a start address of one of the N functions and a start address of the one or more global variables of the N functions, so that, when the prefetch engine reads the start address of one of the N functions, the prefetch engine prefetches into a cache, according to the start address of one of the N functions and the start address of the one or more global variables, data that is in a memory and that is associated with the one or more global variables, wherein there is an address mapping relationship between the start address of the one or more global variables and a start address of the data.

15. The apparatus according to claim 14, wherein the one or more global variables comprise M structure member variables, and M is an integer greater than or equal to 1.

16. The apparatus according to claim 15, wherein the determining module (420) is further configured to:
parse at least one structure member variable used in the N functions, wherein the M structure member variables comprise the at least one structure member variable; and
determine an address offset of each of the at least one structure member variable relative to the start address of the one or more global variables, so that the prefetch engine prefetch into the cache, according to the start address of one of the N functions, the start address of the one or more global variables, and the address offset of each of the at least one structure member variable, data that is in the memory and that is associated with the at least one structure member variable.

17. The apparatus according to claim 15, wherein the determining module (420) is further configured to:
parse at least one structure member variable used in the N functions, wherein the M structure member variables comprise the at least one structure member variable;
determine an address offset of each of the at least one structure member variable relative to the start address of the one or more global variables; and
determine, according to the address offset of each of the at least one structure member variable, a cache line index number of each of the at least one structure member variable in the memory, so that the prefetch engine prefetch into the cache, according to the start address of one of the N functions, the start address of the one or more global variables, and the cache line index number of each structure member variable in the memory, data that is in the memory and that is associated with the at least one structure member variable.

18. The apparatus according to claim 16 or 17, further comprising a parsing module, configured to, before the address offset of each of the at least one structure member variable relative to the start address of the one or more global variables is determined, parse the M structure member variables, to obtain an address offset of each of the M structure member variables relative to the start address of the one or more global variables, and
wherein the determining module (420) is further configured to determine the address offset of each of the at least one structure member variable relative to the start address of the one or more global variables from the address offset of each of the M structure member variables relative to the start address of the one or more global variables.

19. The apparatus according to any one of claims 14 to 18, wherein the obtaining module (410) is further configured to:
receive compilation indication information, and obtain the N functions and the one or more global variables of the N functions according to the compilation indication information, wherein the compilation indication information is used to indicate the N functions and the one or more global variables of the N functions, and/or the compilation indication information is used to indicate the N functions and a global variable that is not used in the N functions.

20. The apparatus according to any one of claims 14 to 18, wherein the obtaining module (410) is further configured to:
read a first correspondence and/or a second correspondence from a text file, and obtain the N functions and the one or more global variables of the N functions according to the first correspondence and/or the second correspondence, wherein the first correspondence is used to indicate the N functions and the one or more global variables of the N functions, and/or the second correspondence is used to indicate the N functions and a global variable that is not used in the N functions.

21. The apparatus according to any one of claims 14 to 20, further comprising:
an output module, configured to, after the start address of one of the N functions and the start address of the one or more global variables are determined, output the start address of one of the N functions and the start address of the one or more global variables to the text file or a binary file, so that the prefetch engine read the start address of one of the N functions and the start address of the one or more global variables that are in the text file or the binary file, and prefetch into the cache, according to the start address of one of the N functions and the start address of the one or more global variables that are read, the data that is in the memory and that is associated with the one or more global variables.

22. The apparatus according to any one of claims 14 to 21, wherein the obtaining module (410) is further configured to:
parse a partition of the N functions, wherein the partition comprises a hot partition and a cold partition; and
obtain the one or more global variables from the hot partition.

23. The apparatus according to any one of claims 14 to 22, wherein the N functions are hotspot functions, and the one or more global variables are hotspot global variables.

24. A data prefetching apparatus (500), comprising:
an obtaining module (510), configured to obtain a start address of one of N functions and a start address of one or more global variables of the N functions, wherein N is an integer greater than or equal to 1, the N functions relating to a specific service; and
a prefetching module (520), configured, when reading the start address of one of the N functions, to prefetch into a cache, according to the start address of one of the N functions and the start address of the one or more global variables of the N functions, data that is in a memory and that is associated with the one or more global variables, wherein there is an address mapping relationship between the start address of the one or more global variables and a start address of the data.

25. The apparatus according to claim 24, wherein the obtaining module (510) is further configured to read the start address of one of the N functions and the start address of the one or more global variables that are input by a compiler into the text file or the binary file, and
wherein the prefetching module (520) is further configured to prefetch into the cache, according to the start address of one of the N functions and the start address of the one or more global variables that are read, the data that is in the memory and that is associated with the one or more global variables.

26. The apparatus according to claim 25, wherein the prefetching module (520) is further configured to:
when the start address of one of the N functions that is in the text file or the binary file is read, prefetch into the cache the data that is in the memory and that is associated with the one or more global variables at the start address of the one or more global variables; or
before a first time period, in which the start address of one of the N functions that is in the text file or the binary file is read, prefetch into the cache the data that is in the memory and that is associated with the one or more global variables at the start address of the one or more global variables; or
after a second time period, in which the start address of one of the N functions that is in the text file or the binary file is read, prefetch into the cache the data that is in the memory and that is associated with the one or more global variables at the start address of the one or more global variables.

27. A data prefetching system (600, 900), comprising the apparatus according to any one of claims 14 to 23 and the apparatus according to any one of claims 24 to 26.

## Patentansprüche

1. Verfahren zum Vorausladen von Daten, das umfasst:
Erhalten (310), durch einen Kompilierer, von N Funktionen und einer oder mehreren globalen Variablen der N Funktionen, wobei N eine ganze Zahl größer als oder gleich 1 ist, wobei sich die N Funktionen auf einen spezifischen Dienst beziehen; und Bestimmen (320), durch den Kompilierer, einer Startadresse einer der N Funktionen und einer Startadresse der einen oder der mehreren globalen Variablen der N Funktionen, sodass, wenn eine Vorauslade-Engine (230) die Startadresse einer der N Funktionen liest, die Vorauslade-Engine (230) in einen Cache, gemäß der Startadresse einer der N Funktionen und der Startadresse der einen oder der mehreren globalen Variablen, Daten, die sich in einem Speicher befinden und die der einen oder den mehreren globalen Variablen zugeordnet sind, vorauslädt (330), wobei eine Adresszuordnungsbeziehung zwischen der Startadresse der einen oder der mehreren globalen Variablen und einer Startadresse der Daten vorliegt.

2. Verfahren nach Anspruch 1, wobei die eine oder die mehreren globalen Variablen M Strukturelementvariablen umfassen und M eine ganze Zahl größer als oder gleich 1 ist.

3. Verfahren nach Anspruch 2, wobei das Bestimmen einer Startadresse einer der N Funktionen und einer Startadresse der einen oder der mehreren globalen Variablen, sodass eine Vorauslade-Engine in einen Cache, gemäß der Startadresse einer der N Funktionen und der Startadresse der einen oder der mehreren globalen Variablen, Daten vorauslädt, die sich in einem Speicher befinden und die der einen oder den mehreren globalen Variablen zugeordnet sind, umfasst:
Parsen mindestens einer Strukturelementvariablen, die in den N Funktionen verwendet wird, wobei die M-Strukturelementvariablen die mindestens eine Strukturelementvariable umfassen; und
Bestimmen eines Adressversatzes jeder der mindestens einen Strukturelementvariablen relativ zu der Startadresse der einen oder der mehreren globalen Variablen, sodass die Vorauslade-Engine in den Cache, gemäß der Startadresse einer der N Funktionen, der Startadresse der einen oder der mehreren globalen Variablen und dem Adressversatz jeder der mindestens einen Strukturelementvariablen, Daten, die sich in dem Speicher befinden und die der mindestens einen Strukturelementvariablen zugeordnet sind, vorauslädt.

4. Verfahren nach Anspruch 2, wobei das Bestimmen einer Startadresse einer der N Funktionen und einer Startadresse der einen oder der mehreren globalen Variablen, sodass eine Vorauslade-Engine in einen Cache, gemäß der Startadresse einer der N Funktionen und der Startadresse der einen oder der mehreren globalen Variablen, Daten vorauslädt, die sich in einem Speicher befinden und die der einen oder den mehreren globalen Variablen zugeordnet sind, umfasst:
Parsen mindestens einer Strukturelementvariablen, die in den N Funktionen verwendet wird, wobei die M-Strukturelementvariablen die mindestens eine Strukturelementvariable umfassen;
Bestimmen eines Adressversatzes jeder der mindestens einen Strukturelementvariablen relativ zu der Startadresse der einen oder der mehreren globalen Variablen; und
Bestimmen, gemäß dem Adressversatz jeder der mindestens einen Strukturelementvariablen, einer Cache-Zeilenindexnummer jeder der mindestens einen Strukturelementvariablen in dem Speicher, sodass die Vorauslade-Engine in den Cache, gemäß der Startadresse einer der N Funktionen, der Startadresse der einen oder der mehreren globalen Variablen und der Cache-Zeilenindexnummer jeder Strukturelementvariablen in dem Speicher, Daten, die sich in dem Speicher befinden und die der mindestens einen Strukturelementvariablen zugeordnet sind, vorauslädt.

5. Verfahren nach Anspruch 3 oder 4, wobei, vor dem Bestimmen eines Adressversatzes jeder der mindestens einen Strukturelementvariablen relativ zu der Startadresse der einen oder der mehreren globalen Variablen, das Verfahren ferner das Parsen der M Strukturelementvariablen umfasst, um einen Adressversatz jeder der M Strukturelementvariablen relativ zu der Startadresse der einen oder der mehreren globalen Variablen zu erhalten, und
wobei das Bestimmen eines Adressversatzes jeder der mindestens einen Strukturelementvariablen relativ zu der Startadresse der einen oder der mehreren globalen Variablen das Bestimmen des Adressversatzes jeder der mindestens einen Strukturelementvariablen relativ zu der Startadresse der einen oder der mehreren globalen Variablen aus dem Adressversatz jeder der M Strukturelementvariablen relativ zu der Startadresse der einen oder der mehreren globalen Variablen umfasst.

6. Verfahren nach einem der Ansprüche 1 bis 5, wobei das Erhalten von N Funktionen und einer oder mehreren globalen Variablen der N Funktionen umfasst:
Empfangen von Kompilierungsanzeigeinformationen und Erhalten der N Funktionen und der einen oder der mehreren globalen Variablen der N Funktionen gemäß den Kompilierungsanzeigeinformationen, wobei die Kompilierungsanzeigeinformationen verwendet werden, um die N Funktionen und die eine oder die mehreren globalen Variablen der N Funktionen anzuzeigen.

7. Verfahren nach einem der Ansprüche 1 bis 5, wobei das Erhalten von N Funktionen und einer oder mehreren globalen Variablen der N Funktionen umfasst:
Lesen einer ersten Entsprechung aus einer Textdatei und Erhalten der N Funktionen und der einen oder der mehreren globalen Variablen der N Funktionen gemäß der ersten Entsprechung, wobei die erste Entsprechung verwendet wird, um die N Funktionen und die eine oder die mehreren globalen Variablen der N Funktionen anzuzeigen.

8. Verfahren nach einem der Ansprüche 1 bis 7, wobei, nach dem Bestimmen einer Startadresse einer der N Funktionen und einer Startadresse der einen oder der mehreren globalen Variablen, das Verfahren ferner umfasst:
Ausgeben der Startadresse einer der N Funktionen und der Startadresse der einen oder der mehreren globalen Variablen in eine Textdatei oder eine Binärdatei, sodass die Vorauslade-Engine die Startadresse einer der N Funktionen und die Startadresse der einen oder der mehreren globalen Variablen, die sich in der Textdatei oder der Binärdatei befinden, liest und in den Cache, gemäß der Startadresse der N Funktionen und der Startadresse der einen oder der mehreren globalen Variablen, die gelesen werden, die Daten, die sich in dem Speicher befinden und die der einen oder den mehreren globalen Variablen zugeordnet sind, vorauslädt.

9. Verfahren nach einem der Ansprüche 1 bis 8, wobei das Erhalten einer oder mehrerer globaler Variablen der N Funktionen umfasst:
Parsen einer Partition der N Funktionen, wobei die Partition eine heiße Partition und eine kalte Partition umfasst; und
Erhalten der einen oder der mehreren globalen Variablen von der heißen Partition.

10. Verfahren nach einem der Ansprüche 1 bis 9, wobei die N Funktionen Hotspot-Funktionen sind und die eine oder die mehreren globalen Variablen eine globale Hotspot-Variable sind.

11. Verfahren zum Vorausladen von Daten, das umfasst:
Erhalten, durch eine Vorauslade-Engine, einer Startadresse einer von N Funktionen und einer Startadresse einer oder mehrerer globaler Variablen der N Funktionen,
wobei die Startadressen durch einen Kompilierer bestimmt werden und N eine ganze Zahl größer als oder gleich 1 ist, wobei sich die N Funktionen auf einen spezifischen Dienst beziehen; und
wenn die Startadresse einer der N Funktionen gelesen wird, Vorausladen in einen Cache, durch die Vorauslade-Engine, gemäß der Startadresse der einen der N Funktionen und der Startadresse der einen oder der mehreren globalen Variablen der N Funktionen, von Daten, die sich in einem Speicher befinden und die der einen oder
den mehreren globalen Variablen zugeordnet sind, wobei eine Adresszuordnungsbeziehung zwischen der Startadresse der einen oder den mehreren globalen Variablen und einer Startadresse der Daten vorliegt.

12. Verfahren nach Anspruch 11, wobei das Erhalten einer Startadresse einer von N Funktionen und einer Startadresse einer oder mehrerer globaler Variablen der N Funktionen das Lesen der Startadresse einer der N Funktionen und der Startadresse der einen oder der mehreren globalen Variablen, die durch den Kompilierer in eine Textdatei oder eine Binärdatei eingegeben werden, umfasst, und
wobei das Vorausladen in einen Cache, gemäß der Startadresse einer der N Funktionen und der Startadresse der einen oder der mehreren globalen Variablen der N Funktionen, von Daten, die sich in einem Speicher befinden und die der einen oder den mehreren globalen Variablen zugeordnet sind, das Vorausladen in den Cache, gemäß der Startadresse einer der N Funktionen und der Startadresse der einen oder der mehreren globalen Variablen, die gelesen werden, der Daten, die sich in dem Speicher befinden und die der einen oder den mehreren globalen Variablen zugeordnet sind, umfasst.

13. Verfahren nach Anspruch 12, wobei das Vorausladen in den Cache, gemäß der Startadresse einer der N Funktionen und der Startadresse der einen oder der mehreren globalen Variablen, die gelesen werden, der Daten, die sich in dem Speicher befinden und die der einen oder den mehreren globalen Variablen zugeordnet sind, umfasst:
wenn die Startadresse einer der N Funktionen, die sich in der Textdatei oder der Binärdatei befindet, gelesen wird, Vorausladen in den Cache der Daten, die sich in dem Speicher befinden und die der einen oder den mehreren globalen Variablen an der Startadresse der einen oder der mehreren globalen Variablen zugeordnet sind; oder
vor einem Zeitraum, in dem die Startadresse einer der N Funktionen, die sich in der Textdatei oder der Binärdatei befindet, gelesen wird, Vorausladen in den Cache der Daten, die sich in dem Speicher befinden und die der einen oder den mehreren globalen Variablen an der Startadresse der einen oder der mehreren globalen Variablen zugeordnet sind; oder
nach einem zweiten Zeitraum, in dem die Startadresse einer der N Funktionen, die sich in der Textdatei oder der Binärdatei befindet, gelesen wird, Vorausladen in den Cache der Daten, die sich in dem Speicher befinden und die der einen oder den mehreren globalen Variablen an der Startadresse der einen oder der mehreren globalen Variablen zugeordnet sind.

14. Einrichtung (400) zum Vorausladen von Daten, die umfasst:
ein Erhaltungsmodul (410), das konfiguriert ist, um N Funktionen und eine oder mehrere globale Variablen der N Funktionen zu erhalten, wobei N eine ganze Zahl größer als oder gleich 1 ist, wobei sich die N Funktionen auf einen spezifischen Dienst beziehen;
eine Vorauslade-Engine; und
ein Bestimmungsmodul (420), das konfiguriert ist, um eine Startadresse einer der N Funktionen und eine Startadresse der einen oder der mehreren globalen Variablen der N Funktionen zu bestimmen, sodass, wenn die Vorauslade-Engine die Startadresse einer der N Funktionen liest, die Vorauslade-Engine in einen Cache, gemäß der Startadresse einer der N Funktionen und der Startadresse der einen oder der mehreren globalen Variablen, Daten, die sich in einem Speicher befinden und die der einen oder den mehreren globalen Variablen zugeordnet sind, vorauslädt, wobei eine Adresszuordnungsbeziehung zwischen der Startadresse der einen oder den mehreren globalen Variablen und einer Startadresse der Daten vorliegt.

15. Einrichtung nach Anspruch 14, wobei die eine oder die mehreren globalen Variablen M Strukturelementvariablen umfassen und M eine ganze Zahl größer als oder gleich 1 ist.

16. Einrichtung nach Anspruch 15, wobei das Bestimmungsmodul (420) ferner konfiguriert ist zum:
Parsen mindestens einer Strukturelementvariablen, die in den N Funktionen verwendet wird, wobei die M-Strukturelementvariablen die mindestens eine Strukturelementvariable umfassen; und
Bestimmen eines Adressversatzes jeder der mindestens einen Strukturelementvariablen relativ zu der Startadresse der einen oder der mehreren globalen Variablen, sodass die Vorauslade-Engine in den Cache, gemäß der Startadresse einer der N Funktionen, der Startadresse der einen oder der mehreren globalen Variablen und dem Adressversatz jeder der mindestens einen Strukturelementvariablen, Daten, die sich in dem Speicher befinden und die der mindestens einen Strukturelementvariablen zugeordnet sind, vorauslädt.

17. Einrichtung nach Anspruch 15, wobei das Bestimmungsmodul (420) ferner konfiguriert ist zum:
Parsen mindestens einer Strukturelementvariablen, die in den N Funktionen verwendet wird, wobei die M-Strukturelementvariablen die mindestens eine Strukturelementvariable umfassen;
Bestimmen eines Adressversatzes jeder der mindestens einen Strukturelementvariablen relativ zu der Startadresse der einen oder der mehreren globalen Variablen; und
Bestimmen, gemäß dem Adressversatz jeder der mindestens einen Strukturelementvariablen, einer Cache-Zeilenindexnummer jeder der mindestens einen Strukturelementvariablen in dem Speicher, sodass die Vorauslade-Engine in den Cache, gemäß der Startadresse einer der N Funktionen, der Startadresse der einen oder der mehreren globalen Variablen und der Cache-Zeilenindexnummer jeder Strukturelementvariablen in dem Speicher, Daten, die sich in dem Speicher befinden und die der mindestens einen Strukturelementvariablen zugeordnet sind, vorauslädt.

18. Einrichtung nach Anspruch 16 oder 17, die ferner ein Parsing-Modul umfasst, das konfiguriert ist, um, bevor der Adressversatz jeder der mindestens einen Strukturelementvariablen relativ zu der Startadresse der einen oder mehreren globalen Variablen bestimmt wird, die M Strukturelementvariablen zu parsen, um einen Adressversatz jeder der M-Strukturelementvariablen relativ zu der Startadresse der einen oder der mehreren globalen Variablen zu erhalten, und
wobei das Bestimmungsmodul (420) ferner konfiguriert ist, um den Adressversatz jeder der mindestens einen Strukturelementvariablen relativ zu der Startadresse der einen oder der mehreren globalen Variablen aus dem Adressversatz jeder der M-Strukturelementvariablen relativ zu der Startadresse der einen oder der mehreren globalen Variablen zu bestimmen.

19. Einrichtung nach einem der Ansprüche 14 bis 18, wobei die Erhaltungseinheit (410) ferner konfiguriert ist zum:
Empfangen von Kompilierungsanzeigeinformationen und Erhalten der N Funktionen und der einen oder der mehreren globalen Variablen der N Funktionen gemäß den Kompilierungsanzeigeinformationen, wobei die Kompilierungsanzeigeinformationen verwendet werden, um die N Funktionen und die eine oder die mehreren globalen Variablen der N Funktionen anzuzeigen, und/oder die Kompilierungsanzeigeinformationen verwendet werden, um die N Funktionen und eine globale Variable, die in den N Funktionen nicht verwendet wird, anzuzeigen.

20. Einrichtung nach einem der Ansprüche 14 bis 18, wobei die Erhaltungseinheit (410) ferner konfiguriert ist zum:
Lesen einer ersten Entsprechung und/oder einer zweiten Entsprechung aus einer Textdatei, und Erhalten der N Funktionen und der einen oder der mehreren globalen Variablen der N Funktionen gemäß der ersten Entsprechung und/oder der zweiten Entsprechung, wobei die erste Entsprechung verwendet wird, um die N Funktionen und die eine oder die mehreren globalen Variablen der N Funktionen anzuzeigen, und/oder die zweite Entsprechung verwendet wird, um die N Funktionen und eine globale Variable, die in den N Funktionen nicht verwendet wird, anzuzeigen.

21. Einrichtung nach einem der Ansprüche 14 bis 20, die ferner umfasst:
ein Ausgabemodul, das konfiguriert ist, um, nachdem die Startadresse einer der N Funktionen und die Startadresse der einen oder der mehreren globalen Variablen bestimmt sind, die Startadresse einer der N Funktionen und die Startadresse der einen oder der mehreren globalen Variablen an die Textdatei oder eine Binärdatei auszugeben, sodass die Vorauslade-Engine die Startadresse einer der N Funktionen und die Startadresse der einen oder der mehreren globalen Variablen, die sich in der Textdatei oder der Binärdatei befinden, liest und in den Cache, gemäß der Startadresse einer der N Funktionen und der Startadresse der einen oder der mehreren globalen Variablen, die gelesen werden, die Daten, die sich in dem Speicher befinden und die mit der einen oder den mehreren globalen Variablen zugeordnet sind, vorauslädt.

22. Einrichtung nach einem der Ansprüche 14 bis 21, wobei das Erhaltungsmodul (410) ferner konfiguriert ist zum:
Parsen einer Partition der N Funktionen, wobei die Partition eine heiße Partition und eine kalte Partition umfasst; und
Erhalten der einen oder der mehreren globalen Variablen von der heißen Partition.

23. Einrichtung nach einem der Ansprüche 14 bis 22, wobei die N Funktionen Hotspot-Funktionen sind und die eine oder die mehreren globalen Variablen globale Hotspot-Variablen sind.

24. Einrichtung (500) zum Vorausladen von Daten, die umfasst:
ein Erhaltungsmodul (510), das konfiguriert ist, um eine Startadresse einer von N Funktionen und eine Startadresse einer oder mehrerer globaler Variablen der N Funktionen zu erhalten, wobei N eine ganze Zahl größer als oder gleich 1 ist, wobei sich die N Funktionen auf einen spezifischen Dienst beziehen; und
ein Vorauslademodul (520), das konfiguriert ist, um, wenn die Startadresse einer der N Funktionen gelesen wird, in einen Cache, gemäß der Startadresse einer der N Funktionen und der Startadresse der einen oder der mehreren globalen Variablen der N Funktionen, Daten, die sich in einem Speicher befinden und die der einen oder den mehreren globalen Variablen zugeordnet sind, vorauszuladen, wobei eine Adresszuordnungsbeziehung zwischen der Startadresse der einen oder den mehreren globalen Variablen und einer Startadresse der Daten vorliegt.

25. Einrichtung nach Anspruch 24, wobei das Erhaltungsmodul (510) ferner konfiguriert ist, um die Startadresse einer der N Funktionen und die Startadresse der einen oder der mehreren globalen Variablen, die durch einen Kompilierer in die Textdatei oder die Binärdatei eingegeben werden, zu lesen, und
wobei das Vorauslademodul (520) ferner konfiguriert ist, um in den Cache, gemäß der Startadresse einer der N Funktionen und der Startadresse der einen oder der mehreren globalen Variablen, die gelesen werden, die Daten, die sich in dem Speicher befinden und die der einen oder den mehreren globalen Variablen zugeordnet sind, vorauszuladen.

26. Einrichtung nach Anspruch 25, wobei das Vorauslademodul (520) ferner konfiguriert ist zum:
wenn die Startadresse einer der N Funktionen, die sich in der Textdatei oder der Binärdatei befindet, gelesen wird, Vorausladen in den Cache der Daten, die sich in dem Speicher befinden und die der einen oder den mehreren globalen Variablen an der Startadresse der einen oder der mehreren globalen Variablen zugeordnet sind; oder
vor einem ersten Zeitraum, in dem die Startadresse einer der N Funktionen, die sich in der Textdatei oder der Binärdatei befindet, gelesen wird, Vorausladen in den Cache der Daten, die sich in dem Speicher befinden und die der einen oder den mehreren globalen Variablen an der Startadresse der einen oder der mehreren globalen Variablen zugeordnet sind; oder
nach einem zweiten Zeitraum, in dem die Startadresse einer der N Funktionen, die sich in der Textdatei oder der Binärdatei befindet, gelesen wird, Vorausladen in den Cache der Daten, die sich in dem Speicher befinden und die der einen oder den mehreren globalen Variablen an der Startadresse der einen oder der mehreren globalen Variablen zugeordnet sind.

27. System (600, 900) zum Vorausladen von Daten, das die Einrichtung nach einem der Ansprüche 14 bis 23 und die Einrichtung nach einem der Ansprüche 24 bis 26 umfasst.

## Revendications

1. Procédé de prélecture de données, comprenant :
l'obtention (310), par un compilateur, de N fonctions et d'une ou des variables globales des N fonctions, dans lequel N est un entier supérieur ou égal à 1, les N fonctions se rapportant à un service spécifique ; et
la détermination (320), par le compilateur, d'une adresse de début de l'une des N fonctions et d'une adresse de début de la ou des variables globales des N fonctions, de sorte que, lorsqu'un moteur de prélecture (230) lit l'adresse de début d'une des N fonctions, le moteur de prélecture (230) procède à une prélecture (330) dans une mémoire cache, selon l'adresse de début de l'une des N fonctions et de l'adresse de début de la ou des variables globales, des données qui sont dans une mémoire et qui sont associées à la ou aux variables globales, dans lequel il y a une relation de mise en correspondance d'adresses entre l'adresse de début de la ou des variables globales et une adresse de début des données.

2. Procédé selon la revendication 1, dans lequel la ou les variables globales comprennent M variables d'élément de structure, et M est un nombre entier supérieur ou égal à 1.

3. Procédé selon la revendication 2, dans lequel la détermination d'une adresse de début d'une des N fonctions et d'une adresse de début de la ou des variables globales, de sorte qu'un moteur de prélecture procède à une prélecture dans une mémoire cache, selon l'adresse de début de l'une des N fonctions et l'adresse de début de la ou des variables globales, des données qui sont dans une mémoire et qui sont associées à la ou aux variables globales, comprend :
l'analyse syntaxique d'au moins une variable d'élément de structure utilisée dans les N fonctions, dans lequel les M variables d'élément de structure comprennent l'au moins une variable d'élément de structure ; et
la détermination d'un décalage d'adresse de chacune de l'au moins une variable d'élément de structure par rapport à l'adresse de début de la ou des variables globales, de sorte que le moteur de prélecture procède à une prélecture, dans la mémoire cache, selon l'adresse de début de l'une des N fonctions, l'adresse de début de la ou des variables globales, et le décalage d'adresse de chacune de l'au moins une variable d'élément de structure, des données qui sont dans la mémoire et qui sont associées à l'au moins une variable d'élément de structure.

4. Procédé selon la revendication 2, dans lequel la détermination d'une adresse de début d'une des N fonctions et d'une adresse de début de la ou des variables globales, de sorte qu'un moteur de prélecture procède à une prélecture dans une mémoire cache, selon l'adresse de début de l'une des N fonctions et l'adresse de début de la ou des variables globales, des données qui sont dans une mémoire et qui sont associées à la ou aux variables globales, comprend :
l'analyse syntaxique d'au moins une variable d'élément de structure utilisée dans les N fonctions, dans lequel les M variables d'élément de structure comprennent l'au moins une variable d'élément de structure ;
la détermination d'un décalage d'adresse de chacune de l'au moins une variable d'élément de structure par rapport à l'adresse de début de la ou des variables globales ; et
la détermination, selon le décalage d'adresse de chacune de l'au moins une variable d'élément de structure, d'un numéro d'indice de ligne de mémoire cache de chacune de l'au moins une variable d'élément de structure dans la mémoire, de sorte que le moteur de prélecture procède à une prélecture, dans la mémoire cache, selon l'adresse de début de l'une des N fonctions, l'adresse de début de la ou des variables globales, et le numéro d'indice de ligne de mémoire cache de chaque variable d'élément de structure dans la mémoire, des données qui sont dans la mémoire et qui sont associées à l'au moins une variable d'élément de structure.

5. Procédé selon la revendication 3 ou 4, dans lequel, avant la détermination d'un décalage d'adresse de chacune de l'au moins une variable d'élément de structure par rapport à l'adresse de début de la ou des variables globales, le procédé comprend en outre l'analyse syntaxique des M variables d'élément de structure, pour obtenir un décalage d'adresse de chacune des M variables d'élément de structure par rapport à l'adresse de début de la ou des variables globales, et
dans lequel la détermination d'un décalage d'adresse de chacune de l'au moins une variable d'élément de structure par rapport à l'adresse de début de la ou des variables globales comprend la détermination du décalage d'adresse de chacune de l'au moins une variable d'élément de structure par rapport à l'adresse de début de la ou des variables globales à partir du décalage d'adresse de chacune des M variables d'élément de structure par rapport à l'adresse de début de la ou des variables globales.

6. Procédé selon l'une quelconque des revendications 1 à 5, dans lequel l'obtention de N fonctions et d'une ou des variables globales des N fonctions comprend :
la réception des informations d'indication de compilation, et l'obtention des N fonctions et de la ou des variables globales des N fonctions selon les informations d'indication de compilation, dans lequel les informations d'indication de compilation sont utilisées pour indiquer les N fonctions et la ou les variables globales des N fonctions.

7. Procédé selon l'une quelconque des revendications 1 à 5, dans lequel l'obtention de N fonctions et une ou plusieurs variables globales des N fonctions comprend :
la lecture d'une première correspondance d'un fichier texte, et l'obtention des N fonctions et de la ou des variables globales des N fonctions selon la première correspondance, dans lequel la première correspondance est utilisée pour indiquer les N fonctions et la ou les variables globales des N fonctions.

8. Procédé selon l'une quelconque des revendications 1 à 7, dans lequel, après la détermination d'une adresse de début d'une des N fonctions et d'une adresse de début de la ou des variables globales, le procédé comprend en outre :
la sortie de l'adresse de début d'une des N fonctions et de l'adresse de début de la ou des variables globales d'un fichier texte ou d'un fichier binaire, de sorte que le moteur de prélecture lit l'adresse de début d'une des N fonctions et l'adresse de début de la ou des variables globales qui sont dans le fichier texte ou le fichier binaire, et procède à la prélecture, dans la mémoire cache, selon l'adresse de début des N fonctions et l'adresse de début de la ou des variables globales qui sont lues, des données qui sont dans la mémoire et qui sont associées à la ou aux variables globales.

9. Procédé selon l'une quelconque des revendications 1 à 8, dans lequel l'obtention d'une ou des variables globales des N fonctions comprend :
l'analyse syntaxique d'une partition des N fonctions, dans lequel la partition comprend une partition chaude et une partition froide ; et
l'obtention de la ou des variables globales à partir de la partition chaude.

10. Procédé selon l'une quelconque des revendications 1 à 9, dans lequel les N fonctions sont des fonctions de point d'accès sans fil, et la ou les variables globales sont une variable globale de point d'accès sans fil.

11. Procédé de prélecture de données, comprenant :
l'obtention, par un moteur de prélecture, d'une adresse de début de l'une des N fonctions et d'une adresse de début d'une ou des variables globales des N fonctions, dans lequel les adresses de début sont déterminées par un compilateur, et N est un entier supérieur ou égal à 1, les N fonctions se rapportant à un service spécifique ; et
lors de la lecture de l'adresse de début d'une des N fonctions, la prélecture dans une mémoire cache, par le moteur de prélecture, selon l'adresse de début de l'une des N fonctions et l'adresse de début de la ou des variables globales des N fonctions, des données qui sont dans une mémoire et qui sont associées à la ou aux variables globales, dans lequel il y a une relation de mise en correspondance d'adresses entre l'adresse de début de la ou des variables globales et une adresse de début des données.

12. Procédé selon la revendication 11, dans lequel l'obtention d'une adresse de début de l'une des N fonctions et d'une adresse de début d'une ou des variables globales des N fonctions comprend la lecture de l'adresse de début d'une des N fonctions et de l'adresse de début de la ou des variables globales qui sont saisies par le compilateur dans un fichier texte ou un fichier binaire, et
dans lequel la pré-lecture dans une mémoire cache, selon l'adresse de début de l'une des N fonctions et de l'adresse de début de la ou des variables globales des N fonctions, des données qui sont dans une mémoire et qui sont associées à la ou aux variables globales comprend la prélecture, dans la mémoire cache, selon l'adresse de début de l'une des N fonctions et l'adresse de début de la ou des variables globales qui sont lues, des données qui sont dans la mémoire et qui sont associées à la ou aux variables globales.

13. Procédé selon la revendication 12, dans lequel la pré-lecture, dans la mémoire cache, selon l'adresse de début de l'une des N fonctions et l'adresse de début de la ou des variables globales qui sont lues, des données qui sont dans la mémoire et qui sont associées à la ou aux variables globales comprend :
lorsque l'adresse de début de l'une des N fonctions qui est dans le fichier texte ou le fichier binaire est lue, la pré-lecture, dans la mémoire cache, des données qui sont dans la mémoire et qui sont associées à la ou aux variables globales à l'adresse de début de la ou des variables globales ; ou
avant une période de temps, dans laquelle l'adresse de début d'une des N fonctions qui est dans le fichier texte ou le fichier binaire est lue, la prélecture dans la mémoire cache, des données qui sont dans la mémoire et qui sont associées à la ou aux variables globales à l'adresse de début de la ou des variables globales ; ou
après une seconde période de temps, dans laquelle l'adresse de début d'une des N fonctions qui est dans le fichier texte ou le fichier binaire est lue, la prélecture dans la mémoire cache, des données qui sont dans la mémoire et qui sont associées à la ou aux variables globales à l'adresse de début de la ou des variables globales.

14. Appareil de prélecture de données (400), comprenant :
un module d'obtention (410), configuré pour obtenir N fonctions et une ou des variables globales des N fonctions, dans lequel N est un entier supérieur ou égal à 1, les N fonctions se rapportant à un service spécifique ;
un moteur de prélecture ; et
un module de détermination (420), configuré pour déterminer une adresse de début de l'une des N fonctions et une adresse de début de la ou des variables globales des N fonctions, de sorte que, lorsque le moteur de prélecture lit l'adresse de début d'une des N fonctions, le moteur de prélecture procède à une prélecture dans une mémoire cache, selon l'adresse de début de l'une des N fonctions et l'adresse de début de la ou des variables globales, des données qui sont dans une mémoire et qui sont associées à la ou aux variables globales, dans lequel il y a une relation de mise en correspondance d'adresses entre l'adresse de début de la ou des variables globales et une adresse de début des données.

15. Appareil selon la revendication 14, dans lequel la ou les variables globales comprennent M variables d'élément de structure, et M est un nombre entier supérieur ou égal à 1.

16. Appareil selon la revendication 15, dans lequel le module de détermination (420) est en outre configuré pour :
analyser syntaxiquement au moins une variable d'élément de structure utilisée dans les N fonctions, dans lequel les M variables d'élément de structure comprennent l'au moins une variable d'élément de structure ; et
déterminer un décalage d'adresse de chacune de l'au moins une variable d'élément de structure par rapport à l'adresse de début de la ou des variables globales, de sorte que le moteur de prélecture procède à la prélecture dans la mémoire cache, selon l'adresse de début de l'une des N fonctions, l'adresse de début de la ou des variables globales, et le décalage d'adresse de chacune de l'au moins une variable d'élément de structure, des données qui sont dans la mémoire et qui sont associées à l'au moins une variable d'élément de structure.

17. Appareil selon la revendication 15, dans lequel le module de détermination (420) est en outre configuré pour :
analyser syntaxiquement au moins une variable d'élément de structure utilisée dans les N fonctions, dans lequel les M variables d'élément de structure comprennent l'au moins une variable d'élément de structure ;
déterminer un décalage d'adresse de chacune de l'au moins une variable d'élément de structure par rapport à l'adresse de début de la ou des variables globales ; et
déterminer, selon le décalage d'adresse de chacune de l'au moins une variable d'élément de structure, un numéro d'indice de ligne de mémoire cache de chacune de l'au moins une variable d'élément de structure dans la mémoire, de sorte que le moteur de prélecture procède à la prélecture, dans la mémoire cache, selon l'adresse de début de l'une des N fonctions, l'adresse de début de la ou des variables globales, et le numéro d'indice de ligne de mémoire cache de chaque variable d'élément de structure dans la mémoire, des données qui sont dans la mémoire et qui sont associées à l'au moins une variable d'élément de structure.

18. Appareil selon la revendication 16 ou 17, comprenant en outre un module d'analyse syntaxique, configuré pour, avant que le décalage d'adresse de chacune de l'au moins une variable d'élément de structure par rapport à l'adresse de début de la ou des variables globales ne soit déterminé, analyser syntaxiquement les M variables d'élément de structure, afin d'obtenir un décalage d'adresse de chacune des M variables d'élément de structure par rapport à l'adresse de début de la ou des variables globales, et
dans lequel le module de détermination (420) est en outre configuré pour déterminer le décalage d'adresse de chacune de l'au moins une variable d'élément de structure par rapport à l'adresse de début de la ou des variables globales à partir du décalage d'adresse de chacune des M variables d'élément de structure par rapport à l'adresse de début de la ou des variables globales.

19. Appareil selon l'une quelconque des revendications 14 à 18, dans lequel le module d'obtention (410) est en outre configurée pour :
recevoir des informations d'indication de compilation, et obtenir les N fonctions et la ou les variables globales des N fonctions selon les informations d'indication de compilation, dans lequel les informations d'indication de compilation sont utilisées pour indiquer les N fonctions et la ou les variables globales des N fonctions, et/ou les informations d'indication de compilation sont utilisées pour indiquer les N fonctions et une variable globale qui n'est pas utilisée dans les N fonctions.

20. Appareil selon l'une quelconque des revendications 14 à 18, dans lequel le module d'obtention (410) est en outre configuré pour :
lire une première correspondance et/ou une seconde correspondance d'un fichier texte, et obtenir les N fonctions et la ou les variables globales des N fonctions selon la première correspondance et/ou la seconde correspondance, dans lequel la première correspondance est utilisée pour indiquer les N fonctions et la ou les variables globales des N fonctions, et/ou la seconde correspondance est utilisée pour indiquer les N fonctions et une variable globale qui n'est pas utilisée dans les N fonctions.

21. Appareil selon l'une quelconque des revendications 14 à 20, comprenant en outre : un module de sortie, configuré pour, après que l'adresse de début de l'une des N fonctions et l'adresse de début de la ou des variables globales sont déterminées, délivrer l'adresse de début d'une des N fonctions et l'adresse de début de la ou des variables globales au fichier texte ou un fichier binaire, de sorte que le moteur de prélecture lit l'adresse de début d'une des N fonctions et l'adresse de début de la ou des variables globales qui sont dans le fichier texte ou le fichier binaire, et procéder à la prélecture, dans la mémoire cache, selon l'adresse de début de l'une des N fonctions et l'adresse de début de la ou des variables globales qui sont lues, des données qui sont dans la mémoire et qui sont associées à la ou aux variables globales.

22. Appareil selon l'une quelconque des revendications 14 à 21, dans lequel le module d'obtention (410) est en outre configuré pour :
analyser syntaxiquement une partition des N fonctions, dans lequel la partition comprend une partition chaude et une partition froide ; et
obtenir la ou les variables globales à partir de la partition chaude.

23. Appareil selon l'une quelconque des revendications 14 à 22, dans lequel les N fonctions sont des fonctions de point d'accès sans fil, et la ou les variables globales sont des variables globales de point d'accès sans fil.

24. Appareil de prélecture de données (500), comprenant :
un module d'obtention (510), configuré pour obtenir une adresse de début de l'une des N fonctions et une adresse de début d'une ou des variables globales des N fonctions, dans lequel N est un entier supérieur ou égal à 1, les N fonctions se rapportant à un service spécifique ; et
un module de prélecture (520), configuré, lors de la lecture de l'adresse de début d'une des N fonctions, pour procéder à une prélecture dans une mémoire cache, selon l'adresse de début de l'une des N fonctions et de l'adresse de début de la ou des variables globales des N fonctions, des données qui sont dans une mémoire et qui sont associées à la ou aux variables globales, dans lequel il y a une relation de mise en correspondance d'adresses entre l'adresse de début de la ou des variables globales et une adresse de début des données.

25. Appareil selon la revendication 24, dans lequel le module d'obtention (510) est en outre configuré pour lire l'adresse de début d'une des N fonctions et l'adresse de début de la ou des variables globales qui sont saisies par un compilateur dans le fichier texte ou le fichier binaire, et
dans lequel le module de prélecture (520) est en outre configuré pour procéder à la prélecture, dans la mémoire cache, selon l'adresse de début de l'une des N fonctions et de l'adresse de début de la ou des variables globales qui sont lues, des données qui sont dans la mémoire et qui sont associées à la ou aux variables globales.

26. Appareil selon la revendication 25, dans lequel le module de prélecture (520) est en outre configuré pour :
lorsque l'adresse de début d'une des N fonctions qui est dans le fichier texte ou le fichier binaire est lue, procéder à une prélecture dans la mémoire cache, des données qui sont dans la mémoire et qui sont associées à la ou aux variables globales à l'adresse de début de la ou des variables globales ; ou
avant une première période de temps, dans laquelle l'adresse de début d'une des N fonctions qui est dans le fichier texte ou le fichier binaire est lue, procéder à une prélecture dans la mémoire cache, des données qui sont dans la mémoire et qui sont associées à la ou aux variables globales à l'adresse de début de la ou des variables globales ; ou
après une seconde période de temps, dans laquelle l'adresse de début d'une des N fonctions qui est dans le fichier texte ou le fichier binaire est lue, procéder à une prélecture dans la mémoire cache, des données qui sont dans la mémoire et qui sont associées à la ou aux variables globales à l'adresse de début de la ou des variables globales.

27. Système de prélecture de données (600, 900), comprenant l'appareil selon l'une quelconque des revendications 14 à 23, et un appareil selon l'une quelconque des revendications 24 à 26.
